(19)

Europäisches
Patentamt
European
Patent Office
Office européen
des brevets

(11) **EP 4 722 930 A1**

(12) **EUROPEAN PATENT APPLICATION**
published in accordance with Art. 153(4) EPC

(43) Date of publication:
08.04.2026 Bulletin 2026/15

(21) Application number: 24824918.7

(22) Date of filing: 29.02.2024

(51) International Patent Classification (IPC):
*G06F 12/1009* (2016.01)

(52) Cooperative Patent Classification (CPC):
G06F 12/1009

(86) International application number:
PCT/CN2024/079301

(87) International publication number:
WO 2024/260015 (26.12.2024 Gazette 2024/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 19.06.2023 CN 202310728507

(71) Applicant: Huawei Technologies Co., Ltd.
Shenzhen, Guangdong 518129 (CN)

(72) Inventors:
• PAN, Wei
  Shenzhen, Guangdong 518129 (CN)
• XIE, Haijun
  Shenzhen, Guangdong 518129 (CN)
• WU, Pingyu
  Shenzhen, Guangdong 518129 (CN)

(74) Representative: Thun, Clemens
Mitscherlich PartmbB
Karlstraße 7
80333 München (DE)

(54) **METHOD AND APPARATUS FOR DETERMINING PHYSICAL ADDRESS, AND COMPUTING DEVICE AND STORAGE MEDIUM**

(57) This application provides a physical address determining method and apparatus, a computing device, and a storage medium, and pertains to the field of computer technologies. In the method, an input tag generated based on a virtual page number in a first virtual address is matched with a plurality of entries in a page table cache. If the input tag successfully matches a first entry in the plurality of entries, and a combination flag bit in the first entry indicates that a page table entry corresponding to the first entry is a combined entry, a physical address corresponding to the first virtual address is determined based on the virtual page number in the first virtual address and an entry tag and a physical page number in the first entry. In the foregoing method, one entry in the page table cache corresponds to at least one page table entry, so that a physical memory capacity covered by the entry in the page table cache can be increased, to improve a hit rate of the page table cache, reduce a page table walk, and reduce memory access latency and memory access overheads.

A computing device extracts a first quantity of characters at a header of a virtual page number in a to-be-translated first virtual address and a second quantity of characters at a tail of the virtual page number in the to-be-translated first virtual address, and forms a plurality of extracted characters into an input tag — 901

The computing device extracts a remaining character string in the virtual page number in the first virtual address, where the remaining character string is a character string in the virtual page number in the first virtual address other than the first quantity of characters at the header and the second quantity of characters at the tail — 902

The computing device determines, from a plurality of entry sets, a first entry set whose index matches the remaining character string, where a page table cache includes the plurality of entry sets, entries in a same entry set correspond to a same index, the first entry set includes a plurality of entries, each entry includes an entry tag, a physical page number, and a combination flag bit, the combination flag bit indicates whether a page table entry corresponding to the entry is a combined entry, and the page table entry corresponding to the entry is from a page table in a memory — 903

The computing device matches the input tag with the plurality of entries in the first entry set — 904

If the input tag successfully matches a first entry in the plurality of entries in the first entry set, and a combination flag bit in the first entry indicates that a page table entry corresponding to the first entry is the combined entry, the computing device determines, based on the virtual page number in the first virtual address, a first entry tag, and the physical page number, a physical address corresponding to the first virtual address — 905

If the input tag fails to match the plurality of entries, the computing device queries the page table in the memory based on the virtual page number in the first virtual address, and determines, from the page table, a second page table entry that matches the virtual page number in the first virtual address, where the page table entry in the page table includes the physical page number and a quantity flag bit, and the quantity flag bit indicates a quantity of page table entries participating in combination — 906

If the quantity flag bit of the second page table entry indicates that the quantity of page table entries participating in combination is greater than 1, the computing device determines, based on the virtual page number in the first virtual address, a virtual page number corresponding to a third page table entry, and a physical page number in the third page table entry, the physical address corresponding to the first virtual address, where the third page table entry is a page table entry corresponding to a smallest virtual page number in the plurality of page table entries participating in combination — 907

FIG. 9

EP 4 722 930 A1

## Description

This application claims priority to Chinese Patent Application No. 202310728507.8, filed on June 19, 2023 and entitled "PHYSICAL ADDRESS DETERMINING METHOD AND APPARATUS, COMPUTING DEVICE, AND STORAGE MEDIUM", which is incorporated herein by reference in its entirety.

## TECHNICAL FIELD

This application relates to the field of computer technologies, and in particular, to a physical address determining method and apparatus, a computing device, and a storage medium.

## BACKGROUND

In a computing device, before executing instructions, a processor needs to first determine, through a memory management unit (memory management unit, MMU) on the processor, a physical address (physical address, PA) corresponding to a virtual address (virtual address, VA) in the instructions, and then read, from a memory based on the determined physical address, data needed for executing the instructions. The virtual address includes a virtual page number (virtual page number, VPN) and an offset (offset), the physical address includes a physical page number (physical page number, PPN) and the offset. Each virtual page number corresponds to one physical page number, one physical page number indicates one segment of a physical memory, namely, one physical page, and the offset in the virtual address is the same as the offset in the physical address.

In the related technology, an address translation lookaside buffer (translation lookaside buffer, TLB), also referred to as a page table cache, includes a plurality of entries (entries), and each entry is used to store a mapping (mapping) relationship between one virtual page number and one physical page number. When executing the instructions, the processor looks up, in the TLB, the physical page number corresponding to the virtual page number in the virtual address included in the instructions. If look-up succeeds (TLB hit), the physical address is determined based on the physical page number that is found and the offset in the virtual address. If look-up fails (TLB miss), the MMU reads a page table (page table) from the memory, looks up the physical page number corresponding to the virtual page number in each page table entry (page table entry, PTE) of the page table, to determine the physical address, and stores the mapping relationship that is found as one entry in the TLB. Such a process is also referred to as a page table walk (page table walk). Each PTE indicates a mapping (mapping) relationship between one virtual page number and one physical page number.

However, in the foregoing method, one entry in the TLB stores only the mapping relationship between one virtual page number and one physical page number, a storage space of the TLB is limited, and a quantity of page table entries in the page table is much greater than a quantity of entries in the TLB. Therefore, a physical memory size (size) that can be covered by the mapping relationship stored in the TLB is limited. Consequently, a TLB hit rate is not high. Because the page table walk needs to be performed when the TLB miss occurs, and the page table walk needs to consume a long time, memory access latency (memory access latency) is caused and memory access overheads are increased.

## SUMMARY

Embodiments of this application provide a physical address determining method and apparatus, a computing device, and a storage medium, to increase a physical memory capacity covered by an entry in a page table cache, so as to improve a hit rate of the page table cache, reduce a page table walk, and reduce memory access latency and memory access overheads. The technical solutions are as follows:

According to a first aspect, a physical address determining method is provided, and is applied to a computing device. The method includes:

generating an input tag based on a virtual page number in a to-be-translated first virtual address;

matching the input tag with a plurality of entries in a page table cache, where each entry includes an entry tag, a physical page number, and a combination flag bit, and the combination flag bit indicates whether a page table entry corresponding to the entry is a combined entry; and

if the input tag successfully matches a first entry in the plurality of entries, and a combination flag bit in the first entry indicates that a page table entry corresponding to the first entry is a combined entry, determining, based on the virtual page number in the first virtual address and an entry tag and a physical page number in the first entry, a physical address corresponding to the first virtual address.

A page table entry in the page table includes a physical page number and a quantity flag bit, and the quantity flag bit indicates a quantity of page table entries participating in combination. If physical page numbers in consecutive $2^C$ page table entries in the page table are also consecutive, the computing device combines the $2^C$ page table entries, and determines values of quantity flag bits in the $2^C$ page table entries as C, where C is an integer greater than or equal to 0. If the value C of the quantity flag bit in the page table entry queried by the computing device in a page table walk process indicates that the page table entry is the combined entry, the computing device stores, in a combination manner, the consecutive $2^C$ page table entries including the queried page table entry as one entry in the page table cache, so that the page table cache can be hit when virtual addresses included in virtual pages corresponding to the $2^C$ page table entries are translated.

In the foregoing method, one entry in the page table cache corresponds to at least one page table entry, so that a physical memory capacity covered by the entry in the page table cache can be increased, to improve a hit rate of the page table cache, reduce a page table walk, and reduce memory access latency and memory access overheads.

Optionally, the generating the input tag based on the virtual page number in the to-be-translated first virtual address includes:

determining the virtual page number in the first virtual address as the input tag.

In the foregoing method, the virtual page number is directly determined as the input tag, and a character string does not need to be extracted from the virtual page number and used as the input tag, so that efficiency can be improved.

Optionally, the generating the input tag based on the virtual page number in the to-be-translated first virtual address includes:

determining a part of a character string in the virtual page number in the first virtual address as the input tag.

Optionally, the determining the part of the character string in the virtual page number in the first virtual address as the input tag includes:

extracting a first quantity of characters at a header of the virtual page number in the first virtual address and a second quantity of characters at a tail of the virtual page number in the first virtual address, and forming a plurality of extracted characters into the input tag.

Optionally, the page table cache includes a plurality of entry sets, entries in a same entry set correspond to a same index, and the method further includes:

extracting a remaining character string in the virtual page number in the first virtual address, where the remaining character string is a character string in the virtual page number in the first virtual address other than the first quantity of characters at the header and the second quantity of characters at the tail; and

determining, from the plurality of entry sets, a first entry set whose index matches the remaining character string, where the first entry set includes the plurality of entries.

In the foregoing method, the part of the character string in the virtual page number in the first virtual address is used as the input tag, and the remaining character string is used as an index, so that an entry set corresponding to the virtual page number in the first virtual address is first locked, and then the input tags are respectively matched with entries in the entry set. In this way, there is no need to match the input tags with all entries in the page table cache, and matching efficiency can be improved, so that efficiency of determining the physical address is improved, and latency is reduced.

Optionally, the matching the input tag with the plurality of entries in the page table cache includes:

comparing the input tag with the entry tag in the entry if the combination flag bit in the entry indicates that the page table entry corresponding to the entry is an uncombined entry; or

comparing a first character string in the entry tag in the entry with a second character string in the input tag if the combination flag bit in the entry indicates that the page table entry corresponding to the entry is a combined entry, where the first character string is a preceding target bit in the entry tag in the entry, a target bit is a bit just before a 1st character whose value is 1 from right to left in the entry tag in the entry, and the second character string is a preceding target bit in the input tag.

In the foregoing method, when the input tag is matched with the entry, a quantity of bits participating in comparison in the input tag and a quantity of bits participating in comparison in the entry tag are determined based on a value of the combination flag bit in the entry, so that correct matching between the input tag and the entry can be ensured when the page table entry corresponding to the entry is the combined entry, to avoid misjudgment of a matching result that is caused by page table entry combination, and ensure matching accuracy.

Optionally, if the input tag successfully matches the first entry in the plurality of entries, and the combination flag bit in the first entry indicates that the page table entry corresponding to the first entry is the combined entry, the determining, based on the virtual page number in the first virtual address and the entry tag and the physical page number in the first entry, the physical address corresponding to the first virtual address includes:

determining, based on the entry tag in the first entry, a first page table entry from a plurality of page table entries corresponding to the first entry, where a virtual page number corresponding to the first page table entry is the smallest in the plurality of page table entries corresponding to the first entry;

determining, based on the virtual page number in the first virtual address and the virtual page number corresponding to the first page table entry, a first page count that is a difference between the virtual page number in the first virtual address and the virtual page number corresponding to the first page table entry;

determining, based on the first page count, a capacity of a physical page, and the physical page number in the first entry, a physical base address corresponding to the first virtual address; and

determining, based on the physical base address and an offset in the first virtual address, the physical address corresponding to the first virtual address.

Optionally, a plurality of page table entries corresponding to the first entry are from a page table in a memory, the page table entry in the page table includes a physical page number and a quantity flag bit, and the quantity flag bit indicates a quantity of page table entries corresponding to the first entry.

In the foregoing method, one entry in the page table cache corresponds to at least one page table entry, so that a physical memory capacity covered by the entry in the page table cache can be increased, to improve a hit rate of the page table cache, reduce a page table walk, and reduce memory access latency and memory access overheads.

Optionally, the method further includes:

generating the entry tag in the first entry based on a virtual page number and a quantity flag bit of any one of the plurality of page table entries; and

determining a smallest physical page number in the plurality of page table entries as the physical page number in the first entry.

In the foregoing method, one entry in the page table cache corresponds to at least one page table entry, so that a physical memory capacity covered by the entry in the page table cache can be increased, to improve a hit rate of the page table cache, reduce a page table walk, and reduce memory access latency and memory access overheads.

Optionally, the method further includes:

if the input tag fails to match the plurality of entries, querying the page table based on the virtual page number in the first virtual address;

determining, from the page table, a second page table entry that matches the virtual page number in the first virtual address; and

if a quantity flag bit of the second page table entry indicates that a quantity of page table entries participating in combination is greater than 1, determining, based on the virtual page number in the first virtual address, a virtual page number corresponding to a third page table entry, and a physical page number in the third page table entry, the physical address corresponding to the first virtual address, where the third page table entry is a page table entry corresponding to a smallest virtual page number in the plurality of page table entries participating in combination.

Optionally, the method further includes:

if any page table entry in the page table is changed, and a combination flag bit in an entry corresponding to the changed page table entry indicates that the changed page table entry is a combined entry, deleting the entry corresponding to the changed page table entry from the page table cache; or

if any page table entry in the page table is changed, and the combination flag bit in the entry corresponding to the changed page table entry indicates that the changed page table entry is an uncombined entry, updating, based on a virtual page number, a physical page number, and a quantity flag bit that correspond to the changed page table entry, the entry corresponding to the changed page table entry.

In the foregoing method, after the page table entry is changed, the page table and the page table cache are refreshed based on the changed page table entry, to ensure consistency between the entry in the page table cache and the page table entry in the page table, so as to ensure accuracy of the determined physical address.

According to a second aspect, a physical address determining apparatus is provided. The apparatus includes at least one functional module, and the at least one functional module is configured to perform the physical address determining method provided in the first aspect or any possible implementation of the first aspect.

According to a third aspect, a computing device is provided, and the computing device includes a processor and a storage.

The processor is configured to execute instructions stored in the storage, to enable the computing device to perform the physical address determining method provided in the first aspect or any possible implementation of the first aspect.

According to a fourth aspect, a computer program product including instructions is provided; and when the instructions are run by a computing device, the computing device is enabled to perform the physical address determining method provided in the first aspect or any possible implementation of the first aspect.

According to a fifth aspect, a computer-readable storage medium is provided, the computer-readable storage medium includes computer program instructions; and when the computer program instructions are executed by a computing device, the computing device performs the physical address determining method provided in the first aspect or any possible implementation of the first aspect.

**BRIEF DESCRIPTION OF DRAWINGS**

FIG. 1 is a structural diagram of a computing device according to an embodiment of this application;
FIG. 2 is a diagram of combining page table entries according to an embodiment of this application;
FIG. 3 is a schematic flowchart of combining page table entries and generating an entry according to an embodiment of this application;
FIG. 4 is a schematic flowchart of combining page table entries and generating an entry according to an embodiment of this application;
FIG. 5 is a schematic flowchart of combining page table entries and generating an entry according to an embodiment of this application;
FIG. 6 is a schematic flowchart of combining page table entries and generating an entry according to an embodiment of this application;
FIG. 7 is a schematic flowchart of combining page table entries and generating an entry according to an embodiment of this application;
FIG. 8 is a schematic flowchart of combining page table entries and generating an entry according to an embodiment of this application;
FIG. 9 is a flowchart of a physical address determining method according to an embodiment of this application;
FIG. 10 is a diagram of a physical address determining method according to an embodiment of this application;
FIG. 11 is a schematic flowchart of determining a first entry set from a plurality of entry sets according to an embodiment of this application;
FIG. 12 is a flowchart of a physical address determining method according to an embodiment of this application; and
FIG. 13 is a structural diagram of a physical address determining apparatus according to an embodiment of this application.

**DESCRIPTION OF EMBODIMENTS**

To make the objectives, technical solutions, and advantages of this application clearer, the following further describes implementations of this application in detail with reference to the accompanying drawings.

First, a structure of a computing device provided in an embodiment of this application is described.

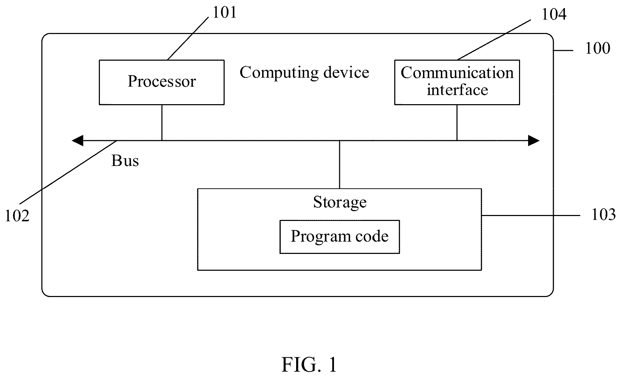

As shown in FIG. 1, FIG. 1 is a structural diagram of a computing device according to an embodiment of this application. The computing device 100 may be a host, a server, a personal computer, or the like. The computing device 100 may be implemented through a general bus architecture.

The computing device 100 includes at least one processor 101, a communication bus 102, a storage 103, and at least one communication interface 104.

The processor 101 is, for example, a general-purpose central processing unit (central processing unit, CPU), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the solutions of this application. For example, the processor 101 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field-programmable gate array (field-programmable gate array, FPGA), a generic array logic (generic array logic, GAL), or any combination thereof.

The communication bus 102 is configured to transmit information between the foregoing components. The communication bus 102 may be classified as an address bus, a data bus, a control bus, or the like. For ease of representation, only one line is used for representation in FIG. 1, but this does not represent that there is only one bus or only one type of bus.

The storage 103 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store desired program code in a form of instructions or a data structure and that can be accessed by a computer, but is not limited thereto. For example, the storage 103 independently exists, and is connected to the processor 101 through the communication bus 102. The storage 103 may alternatively be integrated with the processor 101.

The communication interface 104 is configured to communicate with another device or a communication network by using any apparatus such as a transceiver. The communication interface 104 includes a wired communication interface, and may further include a wireless communication interface. The wired communication interface may be, for example, an Ethernet interface. The Ethernet interface may be an optical interface, an electrical interface, or a combination thereof. The wireless communication interface may be a wireless local area network (wireless local area network, WLAN) interface, a cellular network communication interface, a combination thereof, or the like.

In an embodiment, the processor 101 may include one or more CPUs.

In an embodiment, the computing device 100 may include a plurality of processors, and each of the processors may be a single-core processor (single-CPU) or a multi-core processor (multi-CPU). The processor herein may be one or more devices, circuits, and/or processing cores configured to process data (for example, computer program instructions).

In an embodiment, the computing device 100 may further include an output device and an input device. The output device communicates with the processor 101, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). The input device communicates with the processor 101, and may receive a user input in a plurality of manners. For example, the input device may be a mouse, a keyboard, a touchscreen device, or a sensor device.

In some embodiments, the storage 103 is configured to store program code for executing the solutions of this application, and the processor 101 may execute the program code stored in the storage 103. In other words, the computing device 100 may implement, through the processor 101 and the program code in the storage 103, the physical address determining method provided in the method embodiment.

For ease of understanding content of embodiments of this application, the following explains and describes several technical terms in embodiments of this application.

1. Virtual page and physical page: In memory paging management, a virtual address space and a physical address space are respectively divided into a plurality of storage units with equal capacities. A storage unit obtained by dividing the virtual address space is referred to as the virtual page, and a storage unit obtained by dividing the physical address space is referred to as the physical page. A capacity of the virtual page is equal to a capacity of the physical page. The capacity of the virtual page or the capacity of the physical page may be four kilobytes, two megabytes, one gigabyte, or the like.

2. Physical address: The physical address includes a physical page number and an offset, where the physical page number indicates a physical page on which the physical address is located, and the offset in the physical address is an offset of the physical address relative to a start address of the physical page on which the physical address is located.

3. Virtual address: The virtual address includes a virtual page number and an offset, where the virtual page number indicates a virtual page on which the virtual address is located, and the offset in the virtual address is an offset of the virtual address relative to a start address of the virtual page on which the virtual address is located.

4. Page table: The page table is a data structure in a memory, the page table includes a plurality of page table entries, and each page table entry indicates a mapping relationship between the virtual page number and the physical page number. A computing device can determine, based on the mapping relationship between the virtual page number and the physical page number, a physical page corresponding to the virtual page on which the virtual address is located, and then determine, based on the offset in the virtual address, a physical address corresponding to the virtual address.

5. Page table cache: The page table cache is a cache in a memory management unit on a processor, and is also referred to as a translation lookaside buffer (translation lookaside buffer, TLB). The page table cache includes a plurality of entries, and each entry is used to store a mapping relationship between the virtual page number and the physical page number that is queried from the page table. The computing device stores the mapping relationship queried from the page table as the entry in the page table cache. Therefore, before querying the mapping relationship from the page table next time, the computing device may first query the entry in the page table cache. If hitting any entry in the page table cache, the computing device obtains the mapping relationship stored in the entry without accessing the page table in the memory, so that query time can be saved.

6. Page table walk: If the computing device misses the entry in the page table cache, the computing device accesses the page table in the memory, to query the mapping relationship in the page table, and stores the queried mapping relationship as one entry in the page table cache. Such a process is referred to as a page table walk.

In embodiments of this application, the page table entry in the page table includes the physical page number and a quantity flag bit, and the quantity flag bit indicates a quantity of page table entries participating in combination. If physical page numbers in consecutive $2^C$ page table entries in the page table are also consecutive, the computing device combines the $2^C$ page table entries, and determines values of quantity flag bits in the $2^C$ page table entries as C, where C is an integer greater than or equal to 0. If the value C of the quantity flag bit in the page table entry queried by the computing device in the page table walk process indicates that the page table entry is a combined entry, the computing device stores, in a combination manner, the consecutive $2^C$ page table entries including the queried page table entry as one entry in the page table cache, so that the page table cache can be hit when virtual addresses included in virtual pages corresponding to the $2^C$ page table entries are translated. In this way, a physical memory capacity covered by the page table cache is increased, a hit rate of the page table cache is improved, and the page table walk is reduced, so that memory access latency and memory access overheads are reduced, and performance of the computing device is improved.

The following first describes a process of combining page table entries in embodiments of this application.

First, in embodiments of this application, the page table entry includes a physical page number and a quantity flag bit, and a value of the quantity flag bit indicates a quantity of page table entries participating in combination. In some embodiments, a computing device uses three bits in the page table entry as quantity flag bits, values of the quantity flag bits are denoted as Count, and are denoted as C for short, and the quantity of page table entries participating in combination is denoted as Num, where Num=$2^C$. For example, C=$000_2$=0, that is, Num=$2^0$=1, which indicates that the page table entries are not combined; C=$001_2$=1, that is, Num=$2^1$=2, which indicates that the quantity of page table entries participating in combination is two; and C=$010_2$=2, that is, Num=$2^2$=4, which indicates that the quantity of page table entries participating in combination is four. Other values of C are deduced by analogy. Details are not described again. It should be noted that, the foregoing descriptions of a quantity of bits and a representation manner of the quantity flag bit are used as an example. This is not limited in embodiments of this application.

When managing the page table entries, the computing device combines the page table entries that can be combined. That the computing device manages the page table entries may refer to allocating a new virtual page to a process, or performing swap (swap) in/out on a virtual page.

A process in which the computing device combines the page table entries includes: scanning page table entries in a page table; if physical page numbers in consecutive $2^C$ page table entries in the page table are also consecutive, replacing a physical page number in each of the consecutive $2^C$ page table entries with a smallest physical page number in the consecutive $2^C$ page table entries; and determining values of quantity flag bits in the consecutive $2^C$ page table entries as C, where C is a positive integer greater than or equal to 0.

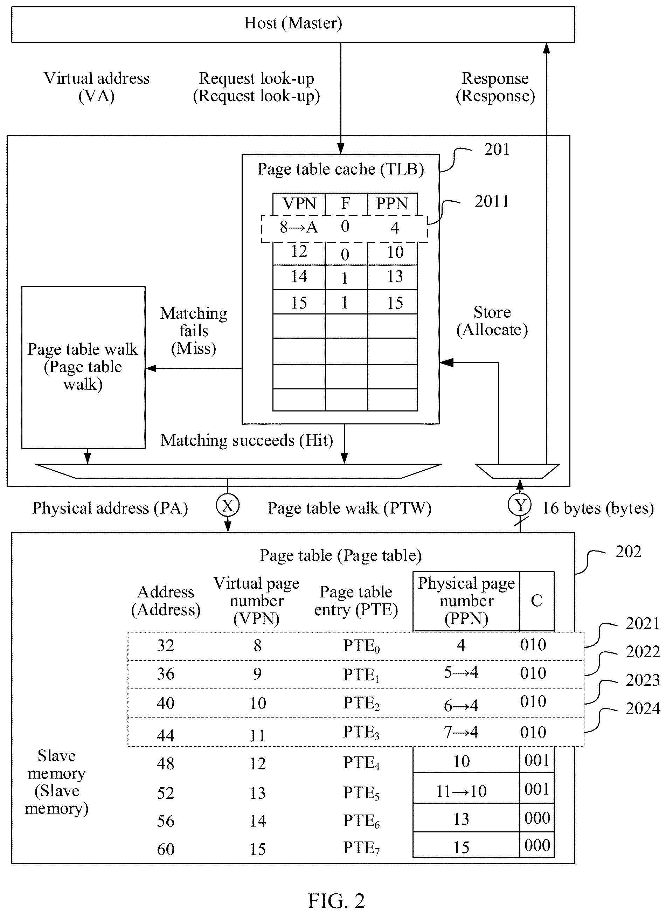

The following uses FIG. 2 as an example to describe the foregoing process of combining the page table entries. FIG. 2 is a diagram of combining page table entries according to an embodiment of this application. FIG. 2 includes a page table cache 201 and a page table 202. The page table includes a plurality of page table entries, where virtual page numbers and physical page numbers of a page table entry 2021 to a page table entry 2024 are all consecutive. A computing device modifies physical page numbers of a page table entry 2022 to the page table entry 2024 in the four page table entries to a physical page number 4 in the page table entry 2021, and quantity flag bits in the four page table entries are all three bits, and values of the quantity flag bits are all $010_2$, to indicate that a quantity of page table entries participating in combination is four.

The foregoing describes a process of combining the page table entries, and the following describes a process of generating an entry in the page table cache based on a combined page table entry.

In embodiments of this application, the entry in the page table cache includes an entry tag, a physical page number, and a combination flag bit, where the combination flag bit indicates whether a page table entry corresponding to the entry is a combined entry. In some embodiments, a value of the combination flag bit is 1, which indicates that a page table entry corresponding to the entry is an uncombined entry; and a value of the combination flag bit is 0, which indicates that a page table entry corresponding to the entry is the combined entry. This is not limited in embodiments of this application.

A process in which the computing device generates the entry in the page table cache based on the combined page table entry includes: determining the value of the combination flag bit based on a quantity flag bit in the combined page table entry; generating one entry tag based on a virtual page number and a quantity flag bit that correspond to the combined page table entry; and generating one entry in the page table cache based on the value of the combination flag bit, the generated entry tag, and a smallest physical page number in the plurality of page table entries participating in combination.

A process in which the computing device generates the entry tag includes: The computing device sets a value of a rightmost bit in virtual page numbers corresponding to the page table entries participating in combination to 1, shifts the rightmost bit to the left by (C-1) bits, and sets values of a $1^{st}$ bit to a $(C-1)^{th}$ bit from right to left in the virtual page numbers to 0, to obtain transformed virtual page numbers. The transformed virtual page numbers are entry tags. C is a value of the quantity flag bit, and C is an integer greater than or equal to 0. It should be noted that, after the foregoing transformation, the virtual page numbers corresponding to the plurality of page table entries participating in combination all correspond to a same entry tag. Therefore, the entry tag generated in the foregoing manner can indicate the plurality of page table entries in the page table.

The following continues to use FIG. 2 as an example to describe the process of generating the entry tag. In FIG. 2, the page table entries participating in combination are the page table entry 2021 to the page table entry 2024. Using the page table entry 2024 as an example, a virtual page number in the page table entry 2024 is "11"="$1011_2$", and a value of the quantity flag bit is $010_2=2$, which indicates that a quantity of page table entries participating in combination is 4, and virtual page numbers in the other three page table entries, namely, the page table entry 2021 to the page table entry 2023 are respectively "8"="$1000_2$", "9"="$1001_2$", and "10"="$1010_2$". The computing device sets a value of a rightmost bit in the virtual page number in the page table entry 2024 to 1, to obtain "$1011_2$", then shifts a rightmost bit in "$1011_2$" to the left by 2-1=1 bit, and sets a value of the rightmost bit in "$1011_2$" to 0, to obtain "$1010_2$", where "$1010_2$" is an entry tag corresponding to the page table entry. If the virtual page numbers corresponding to the other three page table entries are also transformed in the same way, "$1001_2$" is transformed to "$1010_2$", "$1010_2$" is transformed to "$1010_2$", and "$1011_2$" is transformed to "$1010_2$". Clearly, after the foregoing transformation, the virtual page numbers corresponding to the page table entries participating in combination all correspond to a same entry tag "$1010_2$"="$A_{16}$". The page table entry 2021 is a page table entry corresponding to a smallest virtual page number in the plurality of page table entries participating in combination. The computing device uses a physical page number "4" in the page table entry 2021 as the physical page number in the entry, and determines a value of the combination flag bit in the entry as 0. The computing device generates an entry 2011 in the page table cache based on the generated entry tag, the physical page number "4", and the combination flag bit "0".

In the foregoing method, the entry tag generated by the computing device based on the virtual page number and the quantity flag bit that correspond to the page table entries participating in combination can indicate a plurality of page table entries in the page table, so that a physical memory capacity covered by the page cache can be increased, a hit rate of the page table cache can be increased, and a failure rate can be reduced, to reduce a page table walk, and memory access latency and memory access overheads.

It should be noted that, the foregoing process is described by using an example in which the computing device generates the entry in the page table cache based on the combined page table entry. For an uncombined entry, the computing device can also generate the entry in the page table cache based on the uncombined page table entry. Such a process is similar to the foregoing process, and a difference lies in that, in this process, a virtual page number corresponding to the uncombined page table entry does not need to be transformed, and in the foregoing process, a virtual page number corresponding to the combined page table entry needs to be transformed. Similar parts are not described again.

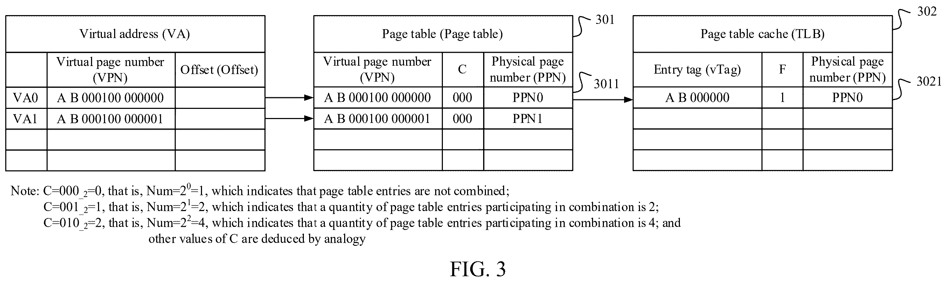

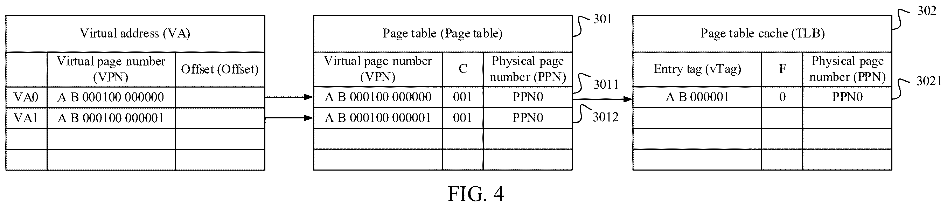

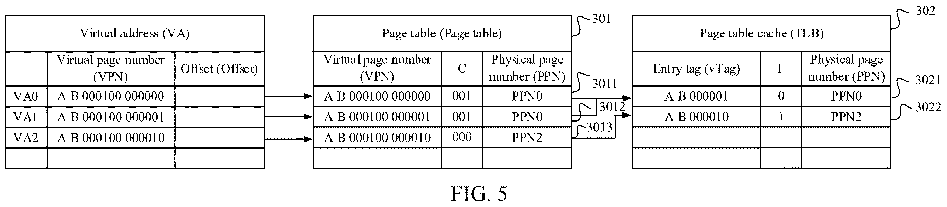

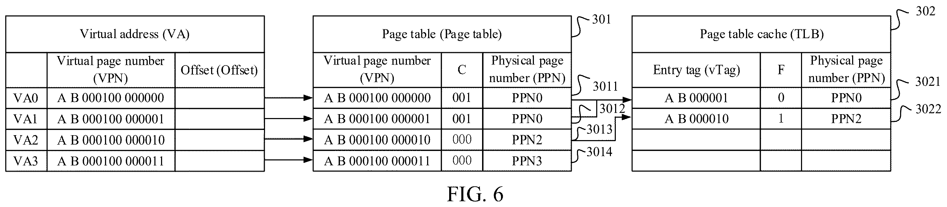

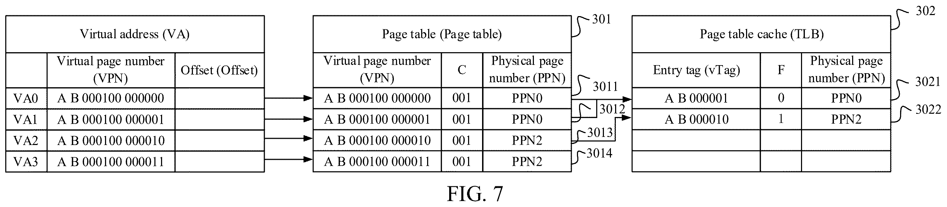

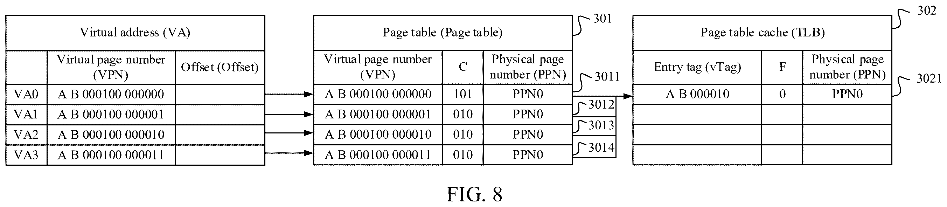

The following uses FIG. 3 to FIG. 8 as an example to describe a process of combining page table entries and generating an entry in a page table cache based on a combined page table entry. FIG. 3 to FIG. 8 are schematic flowcharts of combining page table entries and generating an entry according to an embodiment of this application. As shown in FIG. 3, FIG. 3 includes a page table 301 and a page table cache 302. A page table entry corresponding to a virtual address VA0 is 3011, and a quantity flag bit in the page table entry 3011 is 000. A computing device generates an entry 3021 in the page table cache 302 based on a virtual page number corresponding to the page table entry 3011 and a physical page number in the page table entry 3011. As shown in FIG. 4, a page table entry corresponding to a virtual address VA1 is 3012, and a physical page number in the page table entry 3012 and the physical page number in the page table entry 3011 are consecutive. The computing device modifies the physical page number in 3012 to the physical page number PPN0 in 3011, sets values of quantity flag bits in 3011 and 3012 to $001_2$, and modifies an entry 3021 in the page table cache. As shown in FIG. 5, a page table entry corresponding to a virtual address VA2 is 3013, and the computing device generates an entry 3022 in the page table cache 302 based on a virtual page number and a physical page number in the page table entry 3013. As shown in FIG. 6, the computing device queries, from the page table 301, that a page table entry corresponding to a virtual address VA3 is 3014, and a physical page number in a page table entry 3014 and the physical page number in the page table entry 3013 are consecutive. The computing device modifies the physical page number in 3014 to the physical page number PPN2 in 3013, and sets values of quantity flag bits in 3013 and 3014 to $001_2$. In this case, as shown in FIG. 7, the physical page number in the page table entry 3011 to the physical page number in 3014 are consecutive. As shown in FIG. 8, the computing device modifies the physical page number in 3013 and the physical page number in 3014 to the physical page number PPN0 in 3011, sets values of quantity flag bits in 3011 to 3014 to $010_2$, modifies the entry 3021 in the page table cache 302, and deletes the entry 3022 in the page table cache 302.

It should be noted that, FIG. 3 to FIG. 8 are described by using an example in which the computing device first performs two-in-one combination on a plurality of page table entries participating in combination and then performs four-in-one combination on the plurality of page table entries participating in combination. In some embodiments, the computing device combines the page table entries participating in combination at a time, to improve page table entry combination efficiency. This is not limited in embodiments of this application.

The page table entries combined in the foregoing manner and the generated entry may be applied to a data read/write scenario. In the data read/write scenario, before executing data read/write instructions, the computing device first extracts a to-be-translated virtual address from the data read/write instructions, determines a physical address corresponding to the virtual address, and then performs a data read/write operation based on the determined physical address. The following describes a physical address determining method in the foregoing data read/write scenario. In the method, the computing device generates an input tag based on a virtual page number in the to-be-translated virtual address, and determines an entry matching the input tag from the page table cache. If the entry in the page table cache does not match the input tag, a page table entry matching the input tag is determined from the page table, to determine the physical address corresponding to the virtual address. There are two manners of generating the input tag based on the virtual page number in the to-be-translated virtual address. A first manner is to determine a part of a character string in the virtual page number in the to-be-translated virtual address as the input tag. A second manner is to determine the virtual page number in the to-be-translated virtual address as the input tag. Procedures for determining the physical address in two input tag generation manners are different. The following respectively describes the procedures for determining the physical address in the foregoing two input tag generation manners.

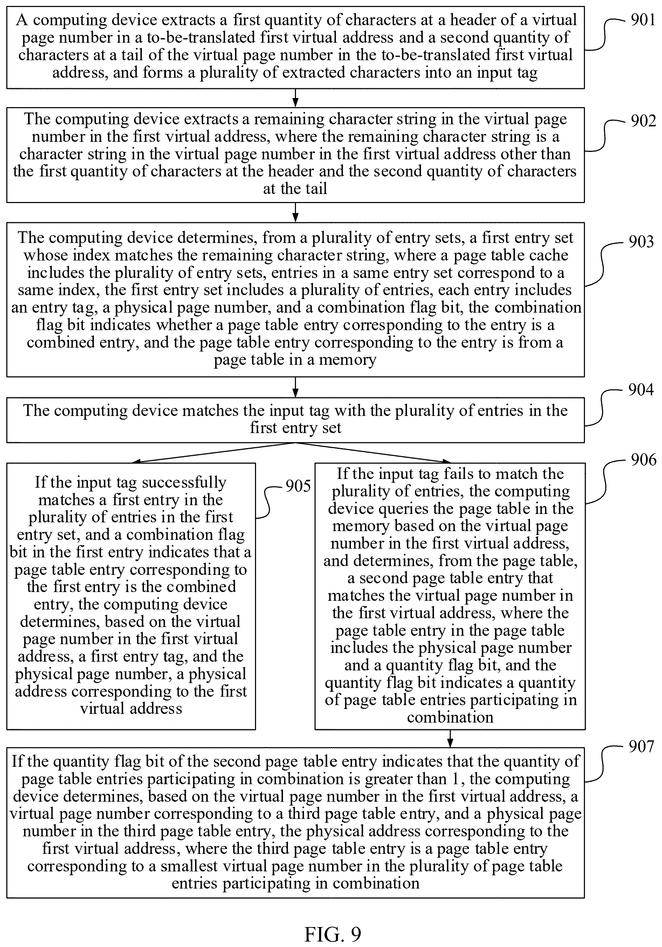

The following uses an example in which the part of the character string in the virtual page number in the to-be-translated virtual address is determined as the input tag for description. FIG. 9 is a flowchart of a physical address determining method according to an embodiment of this application. The method is performed by the computing device shown in FIG. 1. As shown in FIG. 9, the method includes the following step 901 to step 907.

901: The computing device extracts a first quantity of characters at a header of a virtual page number in a to-be-translated first virtual address and a second quantity of characters at a tail of the virtual page number in the to-be-translated first virtual address, and forms a plurality of extracted characters into an input tag.

The virtual page number includes the first quantity of characters at the header, the second quantity of characters at the tail, and a character string in the middle, where the second quantity is related to a maximum quantity of page table entries that correspond to one entry in a page table cache. If one entry in the page table cache corresponds to a maximum of N page table entries, and $N=2^X$, the second quantity is greater than or equal to X, where N is an integer greater than or equal to 1, and X is an integer greater than or equal to 0. The page table cache includes a plurality of entry sets, and a quantity of bits of the character string in the middle is related to a quantity of entry sets in the page table cache. If the page table cache includes M entry sets, and $M=2^Y$, the quantity of bits of the character string in the middle is Y, where M is an integer greater than or equal to 1, and Y is an integer greater than or equal to 0. The first quantity is equal to a quantity of bits of the virtual page number minus the second quantity and the quantity of bits of the character string in the middle.

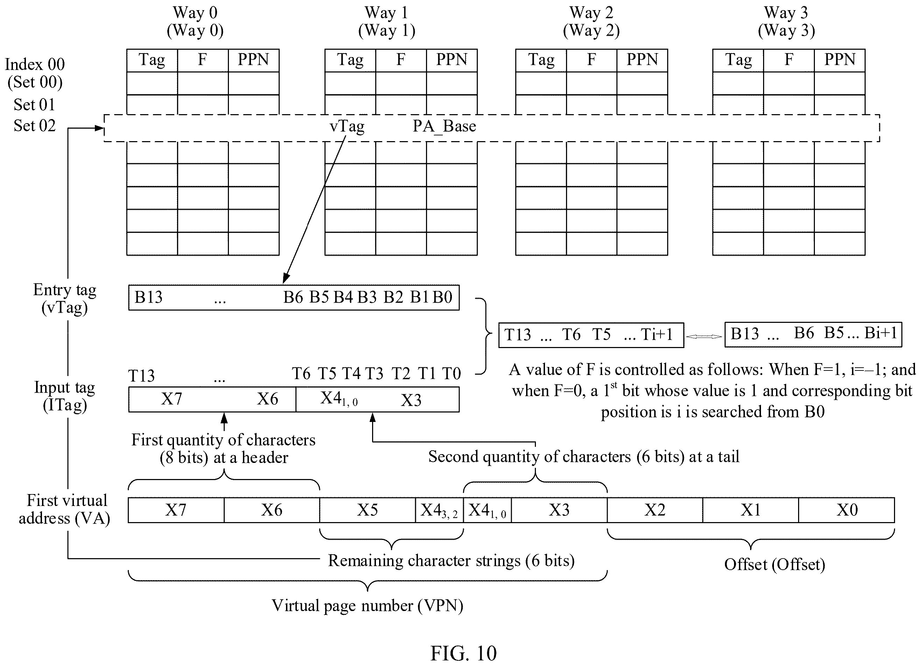

The following uses FIG. 10 as an example to describe the foregoing step 901. FIG. 10 is a diagram of a physical address determining method according to an embodiment of this application. As shown in FIG. 10, the first virtual address VA includes X0 to X7, where Xi represents 4 bits (bits), namely, a 4-bit binary number, which is $Xi_3$, $Xi_2$, $Xi_1$, and $Xi_0$ respectively. Therefore, a quantity of bits of the first virtual address is 32. A quantity of bits of the virtual page number is 20, and a quantity of bits of an offset is 12. The page table cache includes 64 ($2^6$) entry sets, and indexes of the entry sets are set00 to set63. In this case, the quantity of bits of the character string in the middle is six. Each entry corresponds to a maximum of 64 ($2^6$) page table entries. In this case, the second quantity is greater than or equal to six. In FIG. 10, the second quantity is six, and the first quantity is 20-6-6=8. The computing device extracts eight characters {X6 X7} at the header of the virtual page number and six characters {X3 $X4_1$ $X4_0$} at the tail of the virtual page number in the first virtual address. The extracted 14 characters are formed into the input tag {T13... T6 T5 T4 T3 T2 T1 T0}, and the character string in the middle is {X5 $X4_3$ $X4_2$}.

It should be noted that, step 901 is an implementation in which the part of the character string in the virtual page number in the first virtual address is used as the input tag. In some embodiments, the process is implemented in another manner. This is not limited in embodiments of this application.

902: The computing device extracts a remaining character string in the virtual page number in the first virtual address, where the remaining character string is a character string in the virtual page number in the first virtual address other than the first quantity of characters at the header and the second quantity of characters at the tail.

It should be noted that, an execution sequence of step 901 and step 902 is merely an example. Step 902 may be performed before step 901, or step 901 and step 902 may be simultaneously performed. The execution sequence of step 901 and step 902 is not limited in embodiments of this application.

903: The computing device determines, from the plurality of entry sets, a first entry set whose index matches the remaining character string, where the page table cache includes the plurality of entry sets, entries in the same entry set correspond to a same index, the first entry set includes a plurality of entries, each entry includes an entry tag, a physical page number, and a combination flag bit, the combination flag bit indicates whether a page table entry corresponding to the entry is a combined entry, and the page table entry corresponding to the entry is from a page table in a memory.

A quantity of bits of the entry tag in the page table cache is equal to a quantity of bits of the input tag. An origin of the entry tag is the same as the process of generating the entry tag. A difference lies in that, in step 903, if the page table entry corresponding to the entry is an uncombined entry, the entry tag in the entry is the first quantity of characters at the header and the second quantity of characters at the tail in a virtual page number corresponding to the page table entry corresponding to the entry; and if the page table entry corresponding to the entry is the combined entry, the computing device first transforms the virtual page number corresponding to the page table entry, and then extracts a first quantity of characters at a header and a second quantity of characters at a tail in a transformed virtual page number, to obtain the entry tag.

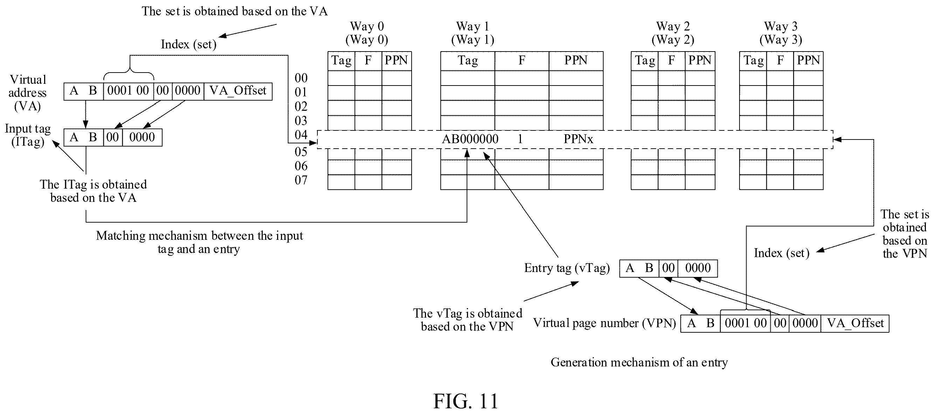

The following uses FIG. 11 as an example to describe step 903. FIG. 11 is a schematic flowchart of determining a first entry set from a plurality of entry sets according to an embodiment of this application. As shown in FIG. 11, the entry tag in the entry in the page table cache is from eight characters at the header and six characters at the tail in the virtual page number corresponding to the page table entry, and an index of an entry set in which the entry is located is six characters ($000100_2$=04) in the middle of the page table entry. The six characters in the middle of the first virtual address are "$000100_2$"=04, and the computing device determines, from the plurality of entry sets, a first entry set whose index is 04, where the first entry set matches a character string "$000100_2$".

904: The computing device matches the input tag with the plurality of entries in the first entry set.

That the computing device matches the input tag with the plurality of entries in the first entry set refers to: matching the input tag with each entry in the first entry set until a first entry matching the input tag is determined or until a process of matching the input tag with all the entries in the first entry set is completed. A process in which the computing device matches the input tag with any entry in the page table cache includes the following two cases.

In a first case, if the combination flag bit in the entry indicates that the page table entry corresponding to the entry is the uncombined entry, the computing device compares the input tag with the entry tag in the entry.

The combination flag bit in the entry indicates that the page table entry corresponding to the entry is the uncombined entry, which indicates that the entry corresponds to only one page table entry, and the virtual page number corresponding to the page table entry is not transformed when the entry tag in the entry is generated. In this case, whether the input tag matches the entry can be determined by comparing the input tag with the entry tag in the entry.

In a second case, if the combination flag bit in the entry indicates that the page table entry corresponding to the entry is the combined entry, a first character string in the entry tag in the entry is compared with a second character string in the input tag. The first character string is a preceding target bit in the entry tag in the entry, a target bit is a bit just before a 1st character whose value is 1 from right to left in the entry tag in the entry, and the second character string is a preceding target bit in the input tag.

The combination flag bit in the entry indicates that the page table entry corresponding to the entry is the combined entry, which indicates that the entry is obtained by combining the plurality of page table entries, and when the entry tag in the entry is generated, the virtual page number corresponding to the page table entry is transformed. In addition, because virtual page numbers corresponding to the plurality of page table entries participating in combination are consecutive, preceding target bits in the virtual page numbers of the plurality of page table entries participating in combination are the same. Therefore, the computing device uses the preceding target bit in the entry tag as the first character string, uses the preceding target bit in the input tag as the second character string, and compares the first character string with the second character string, so that it can be ensured that the input tag correctly matches the entry when the page table entry corresponding to the entry is the combined entry, to avoid misjudgment of a matching result that is caused by page table entry combination.

The following uses FIG. 2 as an example to describe the foregoing second case. In FIG. 2, the entry 2011 is from four page table entries 2021 to 2024 in the page table 202, and virtual page numbers of the four page table entries are respectively "8" ("$1000_2$"), "9" ("$1001_2$"), "10" ("$1010_2$"), and "11" ("$1011_2$"). An entry tag in the entry 2011 corresponding to the four page table entries is "$A_{16}$" ("$1010_2$"). When the input tag is "$1011_2$", if the computing device directly compares the input tag "$1011_2$" with the entry tag "$1010_2$", the entry 2011 does not match the input tag, resulting in misjudgment. In this case, the computing device needs to determine the first character string in the entry tag and the second character string in the input tag, and the entry tag in the entry 2011 includes four bits in total, where the 1st character whose value is 1 from right to left in the entry tag is a 3rd bit, and the target bit is a 2nd bit. In this way, the first character string in the entry tag is the first two bits in the entry tag, namely, "10", and the second character string in the input tag is the first two bits in the input tag, namely, "10". The computing device compares the first character string ("10") in the entry tag with the second character string ("10") in the input tag, and the entry matches the input tag.

In the foregoing method, when the input tag is matched with the entry, a quantity of bits participating in comparison in the input tag and a quantity of bits participating in comparison in the entry tag are determined based on a value of the combination flag bit in the entry, so that correct matching between the input tag and the entry can be ensured when the page table entry corresponding to the entry is the combined entry, to avoid misjudgment of a matching result that is caused by page table entry combination, and ensure matching accuracy.

The following continues to use FIG. 10 as an example to describe step 904. As shown in FIG. 10, the computing device matches {T13... T6 T5... Ti+1} in the input tag with {B13... B6 B5... Bi+1} in the entry tag, where i is an integer, and a value of i is determined by a value of the combination flag bit F in the entry. When F=1, i=-1, that is, {T13... T6 T5... T0} is matched with {B13... B6 B5... B0}. When F=0, a 1st bit whose value is 1 and corresponding bit position is i is searched from B0.

It should be noted that, step 903 and step 904 are described by using an example in which the first entry set includes the plurality of entries. In some embodiments, the first entry set is an empty set, that is, the first entry set does not include any entry. In this case, the input tag fails to match the plurality of entries in the page table cache, and the computing device queries the page table in the memory, to determine a physical address corresponding to the first virtual address, that is, the computing device does not perform step 904, but performs the following step 905 and step 906.

905: If the input tag successfully matches the first entry in the plurality of entries in the first entry set, and a combination flag bit in the first entry indicates that a page table entry corresponding to the first entry is the combined entry, the computing device determines, based on the virtual page number in the first virtual address, a first entry tag, and the physical page number, the physical address corresponding to the first virtual address.

Because the physical page number in the first entry is a smallest physical page number in the plurality of page table entries participating in combination, the computing device first determines, based on the entry tag, a page table entry corresponding to a smallest virtual page number in the plurality of entries participating in combination, and then determines, based on a page count that is a difference between the virtual page number corresponding to the page table entry and the virtual page number in the first virtual address, the physical address corresponding to the first virtual address. The process includes the following step 905A to step 905D.

905A: Determine, based on an entry tag in the first entry, a first page table entry from a plurality of page table entries corresponding to the first entry, where a virtual page number corresponding to the first page table entry is the smallest in the plurality of page table entries corresponding to the first entry.

Corresponding to a generation process of the entry tag, a character string at a header of the virtual page number of the first page table entry is a first character string in the entry tag of the first entry, a character string in the middle is a character string corresponding to an index of an entry set in which the first entry is located, and a value of each bit in a character string at a tail is 0.

905B: Determine, based on the virtual page number in the first virtual address and the virtual page number corresponding to the first page table entry, a first page count that is a difference between the virtual page number in the first virtual address and the virtual page number corresponding to the first page table entry.

The first page count is a difference between the virtual page number in the first virtual address and the virtual page number corresponding to the first page table entry.

Step 905B may be represented by the following Formula (1).

$$N = VPN - VPN0 \qquad (1)$$

In the foregoing Formula (1), $N$ is the first page count, $VPN$ is the virtual page number in the first virtual address, and $VPN0$ is the virtual page number corresponding to the first page table entry.

905C: Determine, based on the first page count, a capacity of a physical page, and the physical page number in the first entry, a physical base address corresponding to the first virtual address.

The physical page number in the first entry is a physical page number in the first page table entry, namely, a smallest physical page number in the plurality of page table entries corresponding to the first entry.

Step 905C may be represented by the following Formula (2).

$$PA' = PA\ Base + Page\ Size \times N \qquad (2)$$

In the foregoing Formula (2), $PA'$ is the physical base address corresponding to the first virtual address, $PA\ Base$ is a physical base address corresponding to the physical page number in the first entry, $Page\ Size$ is the capacity of the physical page, and $N$ is the first page count.

905D: Determine, based on the physical base address and an offset in the first virtual address, the physical address corresponding to the first virtual address.

Step 905D may be represented by the following Formula (3).

$$PA = PA' + VA\ Offset \qquad (3)$$

In the foregoing Formula (3), $PA$ is the physical address corresponding to the first virtual address, $PA'$ is the physical base address corresponding to the first virtual address, and $VA\ Offset$ is the offset in the first virtual address.

Step 905A to step 905D may be combined into the following Formula (4).

$$PA = PA\ Base + Page\ Size \times (VPN - VPN0) + VA\ Offset \quad (4)$$

In the foregoing Formula (4), *PA* is the physical address corresponding to the first virtual address, *PA Base* is the physical base address corresponding to the physical page number in the first entry, *Page Size* is the capacity of the physical page, *VA Offset* is the offset in the first virtual address, *VPN* is the virtual page number in the first virtual address, and *VPN0* is the virtual page number corresponding to the first page table entry.

It should be noted that, step 905 is described by using an example in which the input tag matches the first entry in the plurality of entries, and the combination flag bit in the first entry indicates that the page table entry corresponding to the first entry is the combined entry. In some embodiments, the input tag matches a second entry in the plurality of entries, and a combination flag bit in the second entry indicates that a page table entry corresponding to the second entry is the uncombined entry. In this case, the computing device determines, based on a physical page number in the second entry, the physical address corresponding to the first virtual address, and the process includes: determining a start address of a physical page corresponding to the physical page number based on the physical page number in the second entry; and determining, based on the start address of the physical page and the offset in the first virtual address, the physical address corresponding to the first virtual address.

The foregoing step 905 describes a case in which the input tag successfully matches the first entry in the plurality of entries. The following describes, through the following step 906 and step 907, a case in which the input tag fails to match the plurality of entries.

906: If the input tag fails to match the plurality of entries, the computing device queries the page table in the memory based on the virtual page number in the first virtual address, and determines, from the page table, a second page table entry that matches the virtual page number in the first virtual address, where the page table entry in the page table includes the physical page number and a quantity flag bit, and the quantity flag bit indicates a quantity of page table entries participating in combination.

The determining, from the page table, the second page table entry that matches the virtual page number in the first virtual address refers to: determining, from the page table, a second page table entry whose corresponding virtual page number is the same as the virtual page number in the first virtual address.

907: If the quantity flag bit of the second page table entry indicates that the quantity of page table entries participating in combination is greater than 1, the computing device determines, based on the virtual page number in the first virtual address, a virtual page number corresponding to a third page table entry, and a physical page number in the third page table entry, the physical address corresponding to the first virtual address, where the third page table entry is a page table entry corresponding to a smallest virtual page number in the plurality of page table entries participating in combination.

The physical page numbers in the $2^C$ page table entries participating in combination are all the smallest physical page numbers in the page table entries participating in combination after combination. When the quantity flag bit of the second page table entry indicates that the quantity of page table entries participating in combination is greater than 1, the physical page number in the second page table entry is a physical page number in the third page table entry. Therefore, the computing device first determines a second page count that is a difference between the virtual page number in the first virtual address and the virtual page number corresponding to the third page table entry, then determines, based on the second page count, the capacity of the physical page, and the physical page number in the third page table entry, the physical base address corresponding to the first virtual address, and then determines, based on the physical base address and the offset in the first virtual address, the physical address corresponding to the first virtual address. The process is similar to step 905B to step 905D in step 905. Details are not described again.

It should be noted that, step 906 and step 907 are described by using an example in which the quantity flag bit of the second page table entry indicates that the quantity of page table entries participating in combination is greater than 1. In some embodiments, the quantity flag bit of the second page table entry indicates that the quantity of page table entries participating in combination is equal to 1, that is, the second page table entry is the uncombined entry. In this case, the computing device determines, based on the physical page number in the second page table entry, the physical address corresponding to the first virtual address, and the process includes: determining the start address of the physical page corresponding to the physical page number based on the physical page number in the second page table entry; and determining, based on the start address of the physical page and the offset in the first virtual address, the physical address corresponding to the first virtual address.

In the foregoing method, one entry in the page table cache corresponds to at least one page table entry, so that a physical memory capacity covered by the entry in the page table cache can be increased, to improve a hit rate of the page table cache, reduce a page table walk, and reduce latency and memory access overheads. In addition, when the input tag is matched with the entry, the quantity of bits participating in comparison in the input tag and the quantity of bits participating in comparison in the entry tag are determined based on the value of the combination flag bit in the entry, so that correct matching between the input tag and the entry can be ensured when the entry corresponds to the combined entry, to avoid misjudgment of a matching result that is caused by page table entry combination, and ensure matching accuracy. Further, a part of a character string in the virtual page number in the first virtual address is used as the input tag, and the remaining character string is used as an index, so that an entry set corresponding to the virtual page number in the first virtual address is first locked, and then the input tags are respectively matched with entries in the entry set. Therefore, there is no need to match the input tags with all entries in the page table cache, and matching efficiency can be improved, to improve efficiency of determining the physical address, and reduce latency.

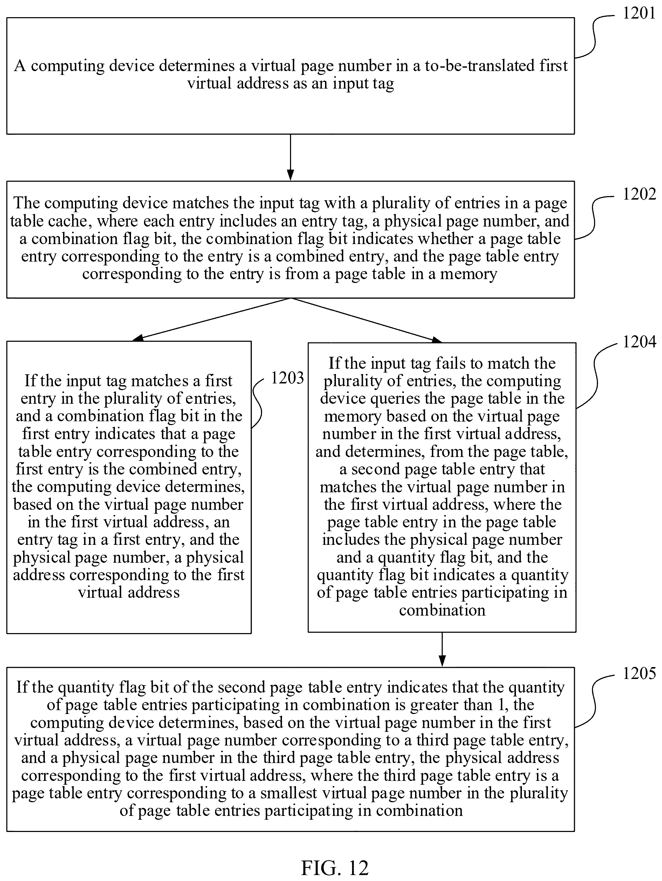

The following uses an example in which the virtual page number in the first virtual address is determined as the input tag for description. FIG. 12 is a flowchart of a physical address determining method according to an embodiment of this application. The method is performed by the computing device. As shown in FIG. 12, the method includes the following step 1201 to step 1205.

1201: The computing device determines a virtual page number in a to-be-translated first virtual address as an input tag.

The computing device determines a virtual page number in a first virtual address as the input tag, that is, uses a character string at a bit corresponding to the virtual page number in the first virtual address as the input tag. For example, if the virtual page number is the first 20 bits of the first virtual address, the computing device uses character strings of the first 20 bits of the first virtual address as the input tag.

1202: The computing device matches the input tag with a plurality of entries in a page table cache, where each entry includes an entry tag, a physical page number, and a combination flag bit, the combination flag bit indicates whether a page table entry corresponding to the entry is a combined entry, and the page table entry corresponding to the entry is from a page table in a memory.

That the computing device matches the input tag with the plurality of entries in the page table cache refers to: matching the input tag with the entries in the page table cache until a first entry matching the input tag is determined or until a process of matching the input tag with all the entries is completed. A process in which the computing device matches the input tag with any entry in the page table cache is similar to the foregoing step 904. Details are not described again.

1203: If the input tag matches a first entry in the plurality of entries, and a combination flag bit in the first entry indicates that a page table entry corresponding to the first entry is the combined entry, the computing device determines, based on the virtual page number in the first virtual address, an entry tag in the first entry, and the physical page number, a physical address corresponding to the first virtual address.

Because the physical page number in the first entry is a smallest physical page number in a plurality of page table entries participating in combination, the computing device first determines, based on the entry tag, a page table entry corresponding to the smallest virtual page number in the plurality of page table entries participating in combination, and then determines, based on a page count that is a difference between the virtual page number corresponding to the page table entry and the virtual page number in the first virtual address, the physical address corresponding to the first virtual address. The process is similar to step 905. A difference lies in step 1203, a character string at a header of a virtual page number corresponding to a first page table entry is a first character string in the entry tag of the first entry, a value of each bit in a character string at a tail is 0, and a character string corresponding to an index of a first entry set is not included. Similar parts are not described again.

1204: If the input tag fails to match the plurality of entries, the computing device queries the page table in the memory based on the virtual page number in the first virtual address, and determines, from the page table, a second page table entry that matches the virtual page number in the first virtual address, where the page table entry in the page table includes the physical page number and a quantity flag bit, and the quantity flag bit indicates a quantity of page table entries participating in combination.

1205: If the quantity flag bit of the second page table entry indicates that the quantity of page table entries participating in combination is greater than 1, the computing device determines, based on the virtual page number in the first virtual address, a virtual page number corresponding to a third page table entry, and a physical page number in the third page table entry, the physical address corresponding to the first virtual address, where the third page table entry is a page table entry corresponding to a smallest virtual page number in the plurality of page table entries participating in combination.

Step 1204 and step 1205 are similar to step 906 and step 907. Details are not described again.

In the foregoing method, one entry in the page table cache corresponds to at least one page table entry, so that a physical memory capacity covered by the entry in the page table cache can be increased, to improve a hit rate of the page table cache, reduce a page table walk, and reduce latency and memory access overheads. Further, when the input tag is matched with the entry, a quantity of bits participating in comparison in the input tag and a quantity of bits participating in comparison in the entry tag are determined based on a value of the combination flag bit in the entry, so that correct matching between the input tag and the entry can be ensured when the entry corresponds to the combined entry, to avoid misjudgment of a matching result that is caused by the page table entry combination, and ensure accuracy of the matching result.

The foregoing uses the procedures shown in FIG. 9 and FIG. 12 as an example to describe a procedure of a physical address determining method provided in embodiments of this application. In some embodiments, the page table entry in the page table is changed. For example, the physical page number in the page table entry is modified, or a status of the page table entry is changed (a virtual page corresponding to the page table entry is swapped in or swapped out). Consequently, a previously combined page table entry cannot accurately indicate a mapping relationship between the virtual page number and the physical page number. The computing device refreshes the page table and the page table cache based on the changed page table entry. If the changed page table entry is a page table entry participating in combination, the computing device deletes an entry corresponding to the page table entry, or sets an entry corresponding to the page table entry to be invalid, and recombines the page table entries in the page table.

A process in which the computing device refreshes the page table cache based on the changed page table entry includes: if any page table entry in the page table is changed, and a combination flag bit in the entry corresponding to the changed page table entry indicates that the changed page table entry is the combined entry, deleting the entry corresponding to the changed page table entry from the page table cache; and if any page table entry in the page table is changed, and the combination flag bit in the entry corresponding to the changed page table entry indicates that the changed page table entry is an uncombined entry, updating, based on a virtual page number, a physical page number, and a quantity flag bit that correspond to the changed page table entry, the entry corresponding to the changed page table entry. In some embodiments, when the changed page table entry is the combined entry, the computing device sets the entry corresponding to the changed page table entry in the page table cache to be invalid.

A process in which the computing device refreshes the page table based on the changed page table entry includes: scanning the page table entries that can be combined before changing; if physical page numbers of $2^C$ page table entries in the page table entries that can be combined before changing are consecutive, replacing a physical page number in each of the consecutive $2^C$ page table entries with a smallest physical page number in the consecutive $2^C$ page table entries; and determining a value of a quantity flag bit in the consecutive $2^C$ page table entries as C, where C is a positive integer greater than or equal to 0. For example, the page table entries participating in combination are respectively page table entries 2021 to 2024. If a physical page number in the page table entry 2024 is changed, the page table entry 2024 no longer keeps consecutive with physical page numbers in the page table entries 2021 to 2023. In this case, the computing device refreshes a value C of a quantity flag bit in the page table entries 2021 and 2022 from $010_2$ to $001_2$, that is, two page table entries are combined, and refreshes a value C of a quantity flag bit in the page table entries 2023 and 2024 from $010_2$ to $000_2$. A physical page number in the page table entry 2023 is restored to 6, and a physical page number in the page table entry 2024 is replaced with the changed physical page number.

In the foregoing method, after the page table entry is changed, the page table and the page table cache are refreshed based on the changed page table entry, to ensure consistency between the entry in the page table cache and the page table entry in the page table, so as to ensure accuracy of the determined physical address.

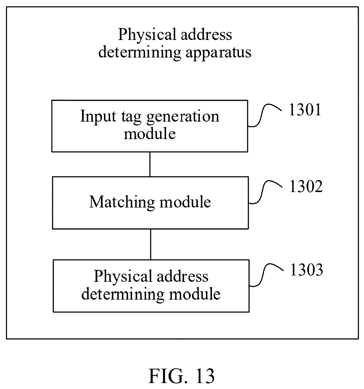

FIG. 13 is a structural diagram of a physical address determining apparatus according to an embodiment of this application. The apparatus includes an input tag generation module 1301, a matching module 1302, and a physical address determining module 1303.

The input tag generation module 1301 is configured to generate an input tag based on a virtual page number in a to-be-translated first virtual address.

The matching module 1302 is configured to match the input tag with a plurality of entries in a page table cache, where each entry includes an entry tag, a physical page number, and a combination flag bit, and the combination flag bit indicates whether a page table entry corresponding to the entry is a combined entry.

The physical address determining module 1303 is configured to: if the input tag successfully matches a first entry in the plurality of entries, and a combination flag bit in the first entry indicates that a page table entry corresponding to the first entry is the combined entry, determine, based on a virtual page number in a first virtual address and an entry tag and a physical page number in the first entry, a physical address corresponding to the first virtual address.

Optionally, the input tag generation module 1301 is configured to:
determine the virtual page number in the first virtual address as the input tag.

Optionally, the input tag generation module 1301 includes:
an input tag determining unit, configured to determine a part of a character string in the virtual page number in the first virtual address as the input tag.

Optionally, the input tag determining unit is configured to:
extract a first quantity of characters at a header of the virtual page number in the first virtual address and a second quantity of characters at a tail of the virtual page number, and form a plurality of extracted characters into the input tag.

Optionally, the page table cache includes a plurality of entry sets, entries in a same entry set correspond to a same index, and the apparatus further includes:

a character string extraction module, configured to extract a remaining character string in the virtual page number in the first virtual address, where the remaining character string is a character string in the virtual page number in the first virtual address other than the first quantity of characters at the header and the second quantity of characters at the tail;

and

a first entry set determining module, configured to determine, from the plurality of entry sets, a first entry set whose index matches the remaining character string, where the first entry set includes the plurality of entries.

Optionally, the matching module 1302 is configured to:

compare the input tag with the entry tag in the entry if the combination flag bit in the entry indicates that the page table entry corresponding to the entry is an uncombined entry; or
compare a first character string in the entry tag in the entry with a second character string in the input tag if the combination flag bit in the entry indicates that the page table entry corresponding to the entry is a combined entry, where the first character string is a preceding target bit in the entry tag in the entry, a target bit is a bit just before a $1^{st}$ character whose value is 1 from right to left in the entry tag in the entry, and the second character string is a preceding target bit in the input tag.

Optionally, the physical address determining module 1303 is configured to:

determine, based on the entry tag in the first entry, a first page table entry from a plurality of page table entries corresponding to the first entry, where a virtual page number corresponding to the first page table entry is the smallest in the plurality of page table entries corresponding to the first entry;
determine, based on the virtual page number in the first virtual address and the virtual page number corresponding to the first page table entry, a first page count that is a difference between the virtual page number in the first virtual address and the virtual page number corresponding to the first page table entry;
determine, based on the first page count, a capacity of a physical page, and the physical page number in the first entry, a physical base address corresponding to the first virtual address; and
determine, based on the physical base address and an offset in the first virtual address, the physical address corresponding to the first virtual address.

Optionally, a plurality of page table entries corresponding to the first entry are from a page table in a memory, the page table entry in the page table includes a physical page number and a quantity flag bit, and the quantity flag bit indicates a quantity of page table entries corresponding to the first entry.
Optionally, the apparatus further includes:

an entry tag generation module, configured to generate the entry tag in the first entry based on a virtual page number and a quantity flag bit of any one of the plurality of page table entries; and
a physical page number determining module, configured to determine a smallest physical page number in the plurality of page table entries as the physical page number in the first entry.

Optionally, the physical address determining module 1303 is further configured to:

if the input tag fails to match the plurality of entries, query the page table based on the virtual page number in the first virtual address;
determine, from the page table, a second page table entry that matches the virtual page number in the first virtual address; and
if a quantity flag bit of the second page table entry indicates that a quantity of page table entries participating in combination is greater than 1, determine, based on the virtual page number in the first virtual address, a virtual page number corresponding to a third page table entry, and a physical page number in the third page table entry, the physical address corresponding to the first virtual address, where the third page table entry is a page table entry corresponding to a smallest virtual page number in the plurality of page table entries participating in combination.

Optionally, the apparatus further includes:

an entry deletion module, configured to: if any page table entry in the page table is changed, and a combination flag bit in an entry corresponding to the changed page table entry indicates that the changed page table entry is a combined entry, delete the entry corresponding to the changed page table entry from the page table cache; and
an entry update module, configured to: if any page table entry in the page table is changed, and the combination flag bit in the entry corresponding to the changed page table entry indicates that the changed page table entry is an uncombined entry, update, based on a virtual page number, a physical page number, and a quantity flag bit that correspond to the changed page table entry, the entry corresponding to the changed page table entry.

The input tag generation module 1301, the matching module 1302, and the physical address determining module 1303 may all be implemented through software, or may be implemented through hardware. For example, the following uses the input tag generation module 1301 as an example to describe an implementation of the input tag generation module 1301. Similarly, for implementations of the matching module 1302 and the physical address determining module 1303, refer to the implementation of the input tag generation module 1301.

As an example of a module used as a software functional unit, the input tag generation module 1301 may include code that is run on a computing instance. The computing instance may include at least one of a physical host (a computing device), a virtual machine, and a container. Further, there may be one or more computing instances. For example, the input tag generation module 1301 may include code that is run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is set in one region. A communication gateway needs to be set in each VPC for cross-region communication between two VPCs in a same region and between VPCs in different regions. The VPCs are interconnected through the communication gateway.

As an example of a module used as a hardware functional unit, the input tag generation module 1301 may include at least one computing device, for example, a server. Alternatively, the input tag generation module 1301 may be a device implemented by using an application-specific integrated circuit (application-specific integrated circuit, ASIC), a programmable logic device (programmable logic device, PLD), or the like. The PLD may be implemented by a complex programmable logic device (complex programmable logic device, CPLD), a field-programmable gate array (field-programmable gate array, FPGA), a generic array logic (generic array logic, GAL), or any combination thereof.

The plurality of computing devices included in the input tag generation module 1301 may be distributed in a same region, or may be distributed in different regions. The plurality of computing devices included in the input tag generation module 1301 may be distributed in a same AZ, or may be distributed in different AZs. Similarly, the plurality of computing devices included in the matching module 1302 and the physical address determining module 1303 may be distributed in a same VPC, or may be distributed in the plurality of VPCs. The plurality of computing devices may be any combination of computing devices such as a server, an ASIC, a PLD, a CPLD, an FPGA, and GAL.

It should be noted that, in another embodiment, steps that the foregoing modules are responsible for implementing may be specified as needed, and all functions of the foregoing apparatus are implemented by separately implementing different steps in the foregoing physical address determining method through the foregoing modules. In other words, when the physical address determining apparatus provided in the foregoing embodiment implements the physical address determining method, division of the foregoing functional modules is merely used as an example for description. In actual application, the foregoing functions may be allocated to and completed by different functional modules as needed, that is, the internal structure of the apparatus is divided into different functional modules, to complete all or some of the functions described above. In addition, the apparatus provided in the foregoing embodiment and the corresponding method embodiment belong to a same concept. For a specific implementation process thereof, refer to the method embodiment. Details are not described herein again.

An implementation of this application provides a computer program product including instructions. The computer program product may be software or a program product that includes instructions and that can be run on a computing device or that can be stored in any usable medium. When the computer program product is run on at least one computing device, the at least one computing device performs the physical address determining method provided in the foregoing embodiment.

An embodiment of this application provides a computer-readable storage medium. The computer-readable storage medium may be any usable medium that can be stored by a computing device, or a data storage device, for example, a data center including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and when the instructions are executed by a computing device cluster, the computing device cluster performs the physical address determining method provided in the foregoing embodiment.

It should be noted that, information (including, but not limited to, user equipment information, user personal information, and the like), data (including, but not limited to, data configured for analysis, stored data, displayed data, and the like), and signals in this application are used under authorization by the user or full authorization by all parties, and collection, use, and processing of related data need to conform to related laws, regulations, and standards of related countries and regions. For example, the page table in this application is obtained under full authorization.

A person of ordinary skill in the art may be aware that, in combination with the examples described in embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief descriptions, for a detailed working process of the foregoing described system, apparatus, and unit, refer to a corresponding process in the foregoing method embodiments. Details are not described herein again.

In the several embodiments provided in this application, it should be understood that, the disclosed system, apparatus, and method may be implemented in other manners. For example, the described apparatus embodiment is merely an example. For example, unit division is merely logical function division, and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments of this application.

In addition, units in embodiments of this application may be integrated into one processing unit, each of the units may exist alone physically, or two or more units may be integrated into one unit. The integrated unit may be implemented in a form of hardware, or may be implemented in a form of a software unit.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computing device (which may be a personal computer, a server, a computing device, or the like) to perform all or some of steps of the methods in embodiments of this application. The storage medium includes any medium that can store program code, such as a USB flash drive, a removable hard disk, a read-only memory (read-only memory, ROM), a random access memory (random access memory, RAM), a magnetic disk, a compact disc, or the like.

In this application, terms such as "first" and "second" are used to distinguish between same items or similar items with substantially a same role and function. There is no logical or time sequential dependence between "first", "second", and "n^{th}", and a quantity and an execution order are not limited. It should be further understood that, although the following descriptions use terms such as "first" and "second" to describe various elements, these elements should not be limited by the terms. These terms are simply configured to distinguish one element from another. For example, without departing from the scope of various examples, a first page table entry may be referred to as a second page table entry, and similarly, the second page table entry may be referred to as the first page table entry. Both the first page table entry and the second page table entry may be page table entries, and in some cases, may be separate and different page table entries.

The term "at least one" in this application means one or more, and the term "a plurality of" in this application means two or more. For example, a plurality of page table entries means two or more page table entries. The terms "system" and "network" are often used interchangeably in this specification.

It should be further understood that, the terms "if" may be explained as meaning "when" or "upon" or "in response to determining" or "in response to detecting". Similarly, according to the context, phrases "if it is determined that..." or "if [a stated condition or event] is detected" may be explained as meaning "when it is determined that..." or "in response to determining that..." or "when [a stated condition or event] is detected" or "in response to detecting [a stated condition or event]".

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

All or some of the foregoing embodiments may be implemented through software, hardware, firmware, or any combination thereof. When software is configured to implement embodiments, all or a part of embodiments may be implemented in a form of a computer program product. The computer program product includes one or more computer program instructions. When the computer program instructions are loaded and executed on a computer, all or some of the procedures or functions according to embodiments of this application are all or partially generated. The computer may be a general-purpose computer, a dedicated computer, a computer network, or another programmable apparatus.

The computer instructions may be stored in a computer-readable storage medium or may be transmitted from a computer-readable storage medium to another computer-readable storage medium. For example, the computer program instructions may be transmitted from a website, computer, server, or data center to another website, computer, server, or data center in a wired or wireless manner. The computer-readable storage medium may be any usable medium that can be accessed by the computer, or a data storage device, such as a server or a data center in which one or more usable medium are integrated. The usable medium may be a magnetic medium (for example, a floppy disk, a hard disk, or a magnetic tape), an optical medium (for example, a digital video disc (digital video disc, DVD), or a semiconductor medium (for example, a solid-state drive)), or the like.

A person of ordinary skill in the art may understand that all or some of the steps of embodiments may be implemented by hardware, or may be implemented by a program instructing related hardware. The program may be stored in a computer-readable storage medium. The storage medium may be a read-only memory, a magnetic disk, an optical disc, or the like.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

**Claims**

1. A physical address determining method, applied to a computing device, wherein the method comprises:

   generating an input tag based on a virtual page number in a to-be-translated first virtual address;
   matching the input tag with a plurality of entries in a page table cache, wherein each entry comprises an entry tag, a physical page number, and a combination flag bit, and the combination flag bit indicates whether a page table entry corresponding to the entry is a combined entry; and
   if the input tag successfully matches a first entry in the plurality of entries, and a combination flag bit in the first entry indicates that a page table entry corresponding to the first entry is a combined entry, determining, based on the virtual page number in the first virtual address and an entry tag and a physical page number in the first entry, a physical address corresponding to the first virtual address.

2. The method according to claim 1, wherein the generating the input tag based on the virtual page number in the to-be-translated first virtual address comprises:
   determining the virtual page number in the first virtual address as the input tag.

3. The method according to claim 1, wherein the generating the input tag based on the virtual page number in the to-be-translated first virtual address comprises:
   determining a part of a character string in the virtual page number in the first virtual address as the input tag.

4. The method according to claim 3, wherein the determining the part of the character string in the virtual page number in the first virtual address as the input tag comprises:
   extracting a first quantity of characters at a header of the virtual page number in the first virtual address and a second quantity of characters at a tail of the virtual page number in the first virtual address, and forming a plurality of extracted characters into the input tag.

5. The method according to claim 4, wherein the page table cache comprises a plurality of entry sets, entries in a same entry set correspond to a same index, and the method further comprises:

   extracting a remaining character string in the virtual page number in the first virtual address, wherein the remaining character string is a character string in the virtual page number in the first virtual address other than the first quantity of characters at the header and the second quantity of characters at the tail; and
   determining, from the plurality of entry sets, a first entry set whose index matches the remaining character string, wherein the first entry set comprises the plurality of entries.

6. The method according to any one of claims 1 to 5, wherein the matching the input tag with the plurality of entries in the page table cache comprises:

comparing the input tag with the entry tag in the entry if the combination flag bit in the entry indicates that the page table entry corresponding to the entry is an uncombined entry; or

comparing a first character string in the entry tag in the entry with a second character string in the input tag if the combination flag bit in the entry indicates that the page table entry corresponding to the entry is a combined entry, wherein the first character string is a preceding target bit in the entry tag in the entry, a target bit is a bit just before a $1^{st}$ character whose value is 1 from right to left in the entry tag in the entry, and the second character string is a preceding target bit in the input tag.

7. The method according to claim 1, wherein if the input tag successfully matches the first entry in the plurality of entries, and the combination flag bit in the first entry indicates that the page table entry corresponding to the first entry is the combined entry, the determining, based on the virtual page number in the first virtual address and the entry tag and the physical page number in the first entry, the physical address corresponding to the first virtual address comprises:

determining, based on the entry tag in the first entry, a first page table entry from a plurality of page table entries corresponding to the first entry, wherein a virtual page number corresponding to the first page table entry is the smallest in the plurality of page table entries corresponding to the first entry;

determining, based on the virtual page number in the first virtual address and the virtual page number corresponding to the first page table entry, a first page count that is a difference between the virtual page number in the first virtual address and the virtual page number corresponding to the first page table entry;

determining, based on the first page count, a capacity of a physical page, and the physical page number in the first entry, a physical base address corresponding to the first virtual address; and

determining, based on the physical base address and an offset in the first virtual address, the physical address corresponding to the first virtual address.

8. The method according to claim 1, wherein a plurality of page table entries corresponding to the first entry are from a page table in a memory, the page table entry in the page table comprises a physical page number and a quantity flag bit, and the quantity flag bit indicates a quantity of page table entries corresponding to the first entry.

9. The method according to claim 8, wherein the method further comprises:

generating the entry tag in the first entry based on a virtual page number and a quantity flag bit that correspond to any one of the plurality of page table entries; and

determining a smallest physical page number in the plurality of page table entries as the physical page number in the first entry.

10. The method according to claim 8, wherein the method further comprises:

if the input tag fails to match the plurality of entries, querying the page table based on the virtual page number in the first virtual address;

determining, from the page table, a second page table entry that matches the virtual page number in the first virtual address; and

if a quantity flag bit of the second page table entry indicates that a quantity of page table entries participating in combination is greater than 1, determining, based on the virtual page number in the first virtual address, a virtual page number corresponding to a third page table entry, and a physical page number in the third page table entry, the physical address corresponding to the first virtual address, wherein the third page table entry is a page table entry corresponding to a smallest virtual page number in the plurality of page table entries participating in combination.

11. The method according to claim 8, wherein the method further comprises:

if any page table entry in the page table is changed, and a combination flag bit in an entry corresponding to the changed page table entry indicates that the changed page table entry is a combined entry, deleting the entry corresponding to the changed page table entry from the page table cache; and

if any page table entry in the page table is changed, and the combination flag bit in the entry corresponding to the changed page table entry indicates that the changed page table entry is an uncombined entry, updating, based on a virtual page number, a physical page number, and a quantity flag bit that correspond to the changed page table entry, the entry corresponding to the changed page table entry.

12. A physical address determining apparatus, wherein the apparatus comprises:

an input tag generation module, configured to generate an input tag based on a virtual page number in a to-be-translated first virtual address;

a matching module, configured to match the input tag with a plurality of entries in a page table cache, wherein each entry comprises an entry tag, a physical page number, and a combination flag bit, and the combination flag bit indicates whether a page table entry corresponding to the entry is a combined entry; and

a physical address determining module, configured to: if the input tag successfully matches a first entry in the plurality of entries, and a combination flag bit in the first entry indicates that a page table entry corresponding to the first entry is a combined entry, determine, based on the virtual page number in the first virtual address and an entry tag and a physical page number in the first entry, a physical address corresponding to the first virtual address.

13. The apparatus according to claim 12, wherein the input tag generation module is configured to:
determine the virtual page number in the first virtual address as the input tag.

14. The apparatus according to claim 12, wherein the input tag generation module comprises:
an input tag determining unit, configured to determine a part of a character string in the virtual page number in the first virtual address as the input tag.

15. The apparatus according to claim 14, wherein the input tag determining unit is configured to:
extract a first quantity of characters at a header of the virtual page number in the first virtual address and a second quantity of characters at a tail of the virtual page number, and form a plurality of extracted characters into the input tag.

16. The apparatus according to claim 15, wherein the page table cache comprises a plurality of entry sets, entries in a same entry set correspond to a same index, and the apparatus further comprises:

a character string extraction module, configured to extract a remaining character string in the virtual page number in the first virtual address, wherein the remaining character string is a character string in the virtual page number in the first virtual address other than the first quantity of characters at the header and the second quantity of characters at the tail; and

a first entry set determining module, configured to determine, from the plurality of entry sets, a first entry set whose index matches the remaining character string, wherein the first entry set comprises the plurality of entries.

17. The apparatus according to any one of claims 12 to 16, wherein the matching module is configured to:

compare the input tag with the entry tag in the entry if the combination flag bit in the entry indicates that the page table entry corresponding to the entry is an uncombined entry; or

compare a first character string in the entry tag in the entry with a second character string in the input tag if the combination flag bit in the entry indicates that the page table entry corresponding to the entry is a combined entry, wherein the first character string is a preceding target bit in the entry tag in the entry, a target bit is a bit just before a $1^{st}$ character whose value is 1 from right to left in the entry tag in the entry, and the second character string is a preceding target bit in the input tag.

18. The apparatus according to claim 12, wherein the physical address determining module is configured to:

determine, based on the entry tag in the first entry, a first page table entry from a plurality of page table entries corresponding to the first entry, wherein a virtual page number corresponding to the first page table entry is the smallest in the plurality of page table entries corresponding to the first entry;

determine, based on the virtual page number in the first virtual address and the virtual page number corresponding to the first page table entry, a first page count that is a difference between the virtual page number in the first virtual address and the virtual page number corresponding to the first page table entry;

determine, based on the first page count, a capacity of a physical page, and the physical page number in the first entry, a physical base address corresponding to the first virtual address; and

determine, based on the physical base address and an offset in the first virtual address, the physical address corresponding to the first virtual address.

19. The apparatus according to claim 12, wherein a plurality of page table entries corresponding to the first entry are from a page table in a memory, the page table entry in the page table comprises a virtual page number, a physical page number, and a quantity flag bit, and the quantity flag bit indicates a quantity of page table entries corresponding to the first entry.

20. The apparatus according to claim 19, wherein the apparatus further comprises:

an entry tag generation module, configured to generate the entry tag in the first entry based on a virtual page number and a quantity flag bit of any one of the plurality of page table entries; and
a physical page number determining module, configured to determine a smallest physical page number in the plurality of page table entries as the physical page number in the first entry.

21. The apparatus according to claim 19, wherein the physical address determining module is further configured to:

if the input tag fails to match the plurality of entries, query the page table based on the virtual page number in the first virtual address;
determine, from the page table, a second page table entry that matches the virtual page number in the first virtual address; and
if a quantity flag bit of the second page table entry indicates that a quantity of page table entries participating in combination is greater than 1, determine, based on the virtual page number in the first virtual address, a virtual page number corresponding to a third page table entry, and a physical page number in the third page table entry, the physical address corresponding to the first virtual address, wherein the third page table entry is a page table entry corresponding to a smallest virtual page number in the plurality of page table entries participating in combination.

22. The apparatus according to claim 19, wherein the apparatus further comprises:

an entry deletion module, configured to: if any page table entry in the page table is changed, and a combination flag bit in an entry corresponding to the changed page table entry indicates that the changed page table entry is a combined entry, delete the entry corresponding to the changed page table entry from the page table cache; and
an entry update module, configured to: if any page table entry in the page table is changed, and the combination flag bit in the entry corresponding to the changed page table entry indicates that the changed page table entry is an uncombined entry, update, based on a virtual page number, a physical page number, and a quantity flag bit that correspond to the changed page table entry, the entry corresponding to the changed page table entry.

23. A computing device, comprising a processor and a storage, wherein
the processor is configured to execute instructions stored in the storage, to enable the computing device to perform the physical address determining method according to any one of claims 1 to 11.

24. A computer program product comprising instructions, wherein when the instructions are run by a computing device, the computing device is enabled to perform the physical address determining method according to any one of claims 1 to 11.

25. A computer-readable storage medium, comprising computer program instructions, wherein when the computer program instructions are executed by a computing device, the computing device performs the physical address determining method according to any one of claims 1 to 11.

EP 4 722 930 A1

FIG. 1

22

Host (Master)

Virtual address (VA) | Request look-up (Request look-up) | Response (Response)

~ 201

Page table cache (TLB)

~ 2011

| VPN | F | PPN |
|-----|---|-----|
| 8→A | 0 | 4 |
| 12 | 0 | 10 |
| 14 | 1 | 13 |
| 15 | 1 | 15 |
| | | |
| | | |
| | | |
| | | |

Matching fails (Miss)

Page table walk (Page table walk)

Store (Allocate)

Matching succeeds (Hit)

Physical address (PA)  X  Page table walk (PTW)  Y  16 bytes (bytes)

Page table (Page table)

~ 202

| Address (Address) | Virtual page number (VPN) | Page table entry (PTE) | Physical page number (PPN) | C |
|-------------------|---------------------------|------------------------|----------------------------|---|
| 32 | 8 | $PTE_0$ | 4 | 010 |
| 36 | 9 | $PTE_1$ | 5→4 | 010 |
| 40 | 10 | $PTE_2$ | 6→4 | 010 |
| 44 | 11 | $PTE_3$ | 7→4 | 010 |
| 48 | 12 | $PTE_4$ | 10 | 001 |
| 52 | 13 | $PTE_5$ | 11→10 | 001 |
| 56 | 14 | $PTE_6$ | 13 | 000 |
| 60 | 15 | $PTE_7$ | 15 | 000 |

~ 2021
~ 2022
~ 2023
~ 2024

Slave memory (Slave memory)

FIG. 2

| Virtual address (VA) | | |
|---|---|---|
| | Virtual page number (VPN) | Offset (Offset) |
| VA0 | A B 000100 000000 | |
| VA1 | A B 000100 000001 | |
| | | |
| | | |

| Page table (Page table) | | | — 301 |
|---|---|---|---|
| Virtual page number (VPN) | C | Physical page number (PPN) | — 3011 |
| A B 000100 000000 | 000 | PPN0 | |
| A B 000100 000001 | 000 | PPN1 | |
| | | | |
| | | | |

| Page table cache (TLB) | | | — 302 |
|---|---|---|---|
| Entry tag (vTag) | F | Physical page number (PPN) | — 3021 |
| A B 000000 | 1 | PPN0 | |
| | | | |
| | | | |
| | | | |

Note: $C=000\_2=0$, that is, $Num=2^0=1$, which indicates that page table entries are not combined;

$C=001\_2=1$, that is, $Num=2^1=2$, which indicates that a quantity of page table entries participating in combination is 2;

$C=010\_2=2$, that is, $Num=2^2=4$, which indicates that a quantity of page table entries participating in combination is 4; and

other values of C are deduced by analogy

FIG. 3

**Virtual address (VA)**

| | Virtual page number (VPN) | Offset (Offset) |
|---|---|---|
| VA0 | A B 000100 000000 | |
| VA1 | A B 000100 000001 | |
| | | |
| | | |

301

**Page table (Page table)**

| Virtual page number (VPN) | C | Physical page number (PPN) |
|---|---|---|
| A B 000100 000000 | 001 | PPN0 |
| A B 000100 000001 | 001 | PPN0 |
| | | |
| | | |

3011
3012

302

**Page table cache (TLB)**

| Entry tag (vTag) | F | Physical page number (PPN) |
|---|---|---|
| A B 000001 | 0 | PPN0 |
| | | |
| | | |
| | | |

3021

FIG. 4

| Virtual address (VA) | |
|---|---|
| Virtual page number (VPN) | Offset (Offset) |
| VA0 | A B 000100 000000 | |
| VA1 | A B 000100 000001 | |
| VA2 | A B 000100 000010 | |
| | | |

~301

| Page table (Page table) | | |
|---|---|---|
| Virtual page number (VPN) | C | Physical page number (PPN) |
| A B 000100 000000 | 001 | PPN0 |
| A B 000100 000001 | 001 | PPN0 |
| A B 000100 000010 | 000 | PPN2 |
| | | |

~3011
~3012
~3013

~302

| Page table cache (TLB) | | |
|---|---|---|
| Entry tag (vTag) | F | Physical page number (PPN) |
| A B 000001 | 0 | PPN0 |
| A B 000010 | 1 | PPN2 |
| | | |
| | | |

~3021
~3022

FIG. 5

| Virtual address (VA) | |
|---|---|
| Virtual page number (VPN) | Offset (Offset) |
| VA0 | A B 000100 000000 | |
| VA1 | A B 000100 000001 | |
| VA2 | A B 000100 000010 | |
| VA3 | A B 000100 000011 | |

~301

| Page table (Page table) | | |
|---|---|---|
| Virtual page number (VPN) | C | Physical page number (PPN) |
| A B 000100 000000 | 001 | PPN0 |
| A B 000100 000001 | 001 | PPN0 |
| A B 000100 000010 | 000 | PPN2 |
| A B 000100 000011 | 000 | PPN3 |

3011
3012
3013
3014

~302

| Page table cache (TLB) | | |
|---|---|---|
| Entry tag (vTag) | F | Physical page number (PPN) |
| A B 000001 | 0 | PPN0 |
| A B 000010 | 1 | PPN2 |
| | | |
| | | |

3021
3022

FIG. 6

EP 4 722 930 A1

| Virtual address (VA) | | | | Page table (Page table) | | | ~301 | Page table cache (TLB) | | | ~302 |
|---|---|---|---|---|---|---|---|---|---|---|---|
| | Virtual page number (VPN) | Offset (Offset) | | Virtual page number (VPN) | C | Physical page number (PPN) | ~3011 | Entry tag (vTag) | F | Physical page number (PPN) | ~3021 |
| VA0 | A B 000100 000000 | | → | A B 000100 000000 | 001 | PPN0 | ~3012 | A B 000001 | 0 | PPN0 | ~3022 |
| VA1 | A B 000100 000001 | | → | A B 000100 000001 | 001 | PPN0 | ~3013 | A B 000010 | 1 | PPN2 | |
| VA2 | A B 000100 000010 | | → | A B 000100 000010 | 001 | PPN2 | ~3014 | | | | |
| VA3 | A B 000100 000011 | | → | A B 000100 000011 | 001 | PPN2 | | | | | |

<div align="center">FIG. 7</div>

| Virtual address (VA) | | | Page table (Page table) | | | 301 | Page table cache (TLB) | | | 302 |
|---|---|---|---|---|---|---|---|---|---|---|
| | Virtual page number (VPN) | Offset (Offset) | Virtual page number (VPN) | C | Physical page number (PPN) | 3011 | Entry tag (vTag) | F | Physical page number (PPN) | 3021 |
| VA0 | A B 000100 000000 | | A B 000100 000000 | 101 | PPN0 | | A B 000010 | 0 | PPN0 | |
| VA1 | A B 000100 000001 | | A B 000100 000001 | 010 | PPN0 | 3012 | | | | |
| VA2 | A B 000100 000010 | | A B 000100 000010 | 010 | PPN0 | 3013 | | | | |
| VA3 | A B 000100 000011 | | A B 000100 000011 | 010 | PPN0 | 3014 | | | | |

FIG. 8

A computing device extracts a first quantity of characters at a header of a virtual page number in a to-be-translated first virtual address and a second quantity of characters at a tail of the virtual page number in the to-be-translated first virtual address, and forms a plurality of extracted characters into an input tag ⟩ 901

The computing device extracts a remaining character string in the virtual page number in the first virtual address, where the remaining character string is a character string in the virtual page number in the first virtual address other than the first quantity of characters at the header and the second quantity of characters at the tail ⟩ 902

The computing device determines, from a plurality of entry sets, a first entry set whose index matches the remaining character string, where a page table cache includes the plurality of entry sets, entries in a same entry set correspond to a same index, the first entry set includes a plurality of entries, each entry includes an entry tag, a physical page number, and a combination flag bit, the combination flag bit indicates whether a page table entry corresponding to the entry is a combined entry, and the page table entry corresponding to the entry is from a page table in a memory ⟩ 903

The computing device matches the input tag with the plurality of entries in the first entry set ⟩ 904

If the input tag successfully matches a first entry in the plurality of entries in the first entry set, and a combination flag bit in the first entry indicates that a page table entry corresponding to the first entry is the combined entry, the computing device determines, based on the virtual page number in the first virtual address, a first entry tag, and the physical page number, a physical address corresponding to the first virtual address ⟩ 905

If the input tag fails to match the plurality of entries, the computing device queries the page table in the memory based on the virtual page number in the first virtual address, and determines, from the page table, a second page table entry that matches the virtual page number in the first virtual address, where the page table entry in the page table includes the physical page number and a quantity flag bit, and the quantity flag bit indicates a quantity of page table entries participating in combination ⟩ 906

If the quantity flag bit of the second page table entry indicates that the quantity of page table entries participating in combination is greater than 1, the computing device determines, based on the virtual page number in the first virtual address, a virtual page number corresponding to a third page table entry, and a physical page number in the third page table entry, the physical address corresponding to the first virtual address, where the third page table entry is a page table entry corresponding to a smallest virtual page number in the plurality of page table entries participating in combination ⟩ 907

FIG. 9

|  | Way 0 (Way 0) | | | Way 1 (Way 1) | | | Way 2 (Way 2) | | | Way 3 (Way 3) | | |
|---|---|---|---|---|---|---|---|---|---|---|---|---|
| Index 00 (Set 00) | Tag | F | PPN | Tag | F | PPN | Tag | F | PPN | Tag | F | PPN |

Set 01
Set 02 — vTag   PA_Base

Entry tag (vTag)

B13   ...   B6 B5 B4 B3 B2 B1 B0

T13 ... T6 T5 ... Ti+1 ⟷ B13 ... B6 B5... Bi+1

Input tag (ITag)

T13   ...   T6 T5 T4 T3 T2 T1 T0

| X7 | X6 | X4$_{1,0}$ | X3 |

A value of F is controlled as follows: When F=1, i=−1; and when F=0, a 1$^{st}$ bit whose value is 1 and corresponding bit position is i is searched from B0

First quantity of characters (8 bits) at a header

Second quantity of characters (6 bits) at a tail

First virtual address (VA)

| X7 | X6 | X5 | X4$_{3,2}$ | X4$_{1,0}$ | X3 | X2 | X1 | X0 |

Remaining character strings (6 bits)

Offset (Offset)

Virtual page number (VPN)

FIG. 10

The set is obtained based on the VA

Index (set)

| Way 0 (Way 0) | | | | Way 1 (Way 1) | | | | Way 2 (Way 2) | | | | Way 3 (Way 3) | | |
|---|---|---|---|---|---|---|---|---|---|---|---|---|---|---|
| Tag | F | PPN | | Tag | F | PPN | | Tag | F | PPN | | Tag | F | PPN |

Virtual address (VA)  | A  B | 0001 00 | 00 | 0000 | VA_Offset |

Input tag (ITag)  | A  B | 00 | 0000 |

The ITag is obtained based on the VA

00
01
02
03
04  AB000000    1    PPNx
05
06
07

Matching mechanism between the input tag and an entry

The set is obtained based on the VPN

Index (set)

Entry tag (vTag)  | A  B | 00 | 0000 |

The vTag is obtained based on the VPN  Virtual page number (VPN)  | A  B | 0001 00 | 00 | 0000 | VA_Offset |

Generation mechanism of an entry

FIG. 11

A computing device determines a virtual page number in a to-be-translated first virtual address as an input tag ⌐ 1201

The computing device matches the input tag with a plurality of entries in a page table cache, where each entry includes an entry tag, a physical page number, and a combination flag bit, the combination flag bit indicates whether a page table entry corresponding to the entry is a combined entry, and the page table entry corresponding to the entry is from a page table in a memory ⌐ 1202

If the input tag matches a first entry in the plurality of entries, and a combination flag bit in the first entry indicates that a page table entry corresponding to the first entry is the combined entry, the computing device determines, based on the virtual page number in the first virtual address, an entry tag in a first entry, and the physical page number, a physical address corresponding to the first virtual address ⌐ 1203

If the input tag fails to match the plurality of entries, the computing device queries the page table in the memory based on the virtual page number in the first virtual address, and determines, from the page table, a second page table entry that matches the virtual page number in the first virtual address, where the page table entry in the page table includes the physical page number and a quantity flag bit, and the quantity flag bit indicates a quantity of page table entries participating in combination ⌐ 1204

If the quantity flag bit of the second page table entry indicates that the quantity of page table entries participating in combination is greater than 1, the computing device determines, based on the virtual page number in the first virtual address, a virtual page number corresponding to a third page table entry, and a physical page number in the third page table entry, the physical address corresponding to the first virtual address, where the third page table entry is a page table entry corresponding to a smallest virtual page number in the plurality of page table entries participating in combination ⌐ 1205

FIG. 12

Physical address
determining apparatus

Input tag generation
module — 1301

Matching module — 1302

Physical address
determining module — 1303

FIG. 13

## INTERNATIONAL SEARCH REPORT

| International application No. |
| --- |
| **PCT/CN2024/079301** |

**A. CLASSIFICATION OF SUBJECT MATTER**

G06F 12/1009(2016.01)i

According to International Patent Classification (IPC) or to both national classification and IPC

**B. FIELDS SEARCHED**

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNABS, CNTXT, CNKI, VEN, USTXT, EPTXT, WOTXT, IEEE: 虚拟地址, 物理地址, 虚拟页号, 物理页号, 条目, 页表, 合并, 组合, 匹配, 映射, 标签, 索引, 缓存, 缓冲器, virtual address, VA, physical address, PA, virtual page number, VPN, physical page number, PPN, PFN, translation lookaside buffer, TLB, entry, page table, merging, combination, match, mapping, label, index

**C. DOCUMENTS CONSIDERED TO BE RELEVANT**

| Category* | Citation of document, with indication, where appropriate, of the relevant passages | Relevant to claim No. |
| --- | --- | --- |
| A | CN 111949572 A (HYGON INFORMATION TECHNOLOGY CO., LTD.) 17 November 2020 (2020-11-17) description, paragraphs 49-125 | 1-25 |
| A | CN 108139981 A (HUAWEI TECHNOLOGIES CO., LTD.) 08 June 2018 (2018-06-08) entire document | 1-25 |
| A | CN 114201265 A (BEIJING ESWIN COMPUTING TECHNOLOGY CO., LTD.) 18 March 2022 (2022-03-18) entire document | 1-25 |
| A | CN 115292214 A (HYGON INFORMATION TECHNOLOGY CO., LTD.) 04 November 2022 (2022-11-04) entire document | 1-25 |
| A | US 2020174945 A1 (MARVELL INTERNATIONAL LTD.) 04 June 2020 (2020-06-04) entire document | 1-25 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **03 June 2024** | **11 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/079301**

| Patent document cited in search report | | | Publication date (day/month/year) | Patent family member(s) | | | Publication date (day/month/year) |
|---|---|---|---|---|---|---|---|
| CN | 111949572 | A | 17 November 2020 | None | | | |
| CN | 108139981 | A | 08 June 2018 | US | 2019108134 | A1 | 11 April 2019 |
| | | | | EP | 3454218 | A1 | 13 March 2019 |
| | | | | WO | 2018027839 | A1 | 15 February 2018 |
| CN | 114201265 | A | 18 March 2022 | None | | | |
| CN | 115292214 | A | 04 November 2022 | None | | | |
| US | 2020174945 | A1 | 04 June 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310728507